# EUROPEAN PATENT SPECIFICATION

(11) **EP 2 128 804 B1**
(45) Date of publication and mention of the grant of the patent: **20.07.2011**
(21) Application number: 09007073.1
(22) Date of filing: 27.05.2009
(51) Int. Cl.: G06K 19/07, G06K 7/00

(54) **Transponder and interrogator**
Transponder und Interrogator
Transpondeur et interrogateur

(30) Priority: 30.05.2008 JP 2008142131
(43) Date of publication of application: 02.12.2009
(73) Proprietor: Sony Corporation, Tokyo 108-0075 (JP)
(72) Inventor: Kita, Masato, Tokyo 108-0075 (JP)
(74) Representative: Müller - Hoffmann & Partner

(56) References cited:
- US-A- 5 168 282
- US-A- 5 374 930
- US-A- 5 905 444
- US-A1- 2007 013 483

## Description

### BACKGROUND OF THE INVENTION

### 1. Field of the Invention

The present invention relates to a transponder and interrogator, and in particular relates to a transponder and interrogator to realize high-speed communication via electromagnetic waves.

### 2. Description of the Related Art

In related art, a communication system made up of an interrogator that stores and reads predetermined information, and a transponder that responds as to request commands from such interrogator, is widely used. A system that performs communication via electromagnetic waves with such a communication system is called a contactless communication system. Such a contactless communication system is used with an automatic turnstile or a room entry/exit management system for example, and with such a contactless communication system, generally a reader/writer is used as the interrogator and a contactless IC card or contactless ID card is used as the transponder.

With contactless IC cards, the tuning frequency that can most efficiently receive the electromagnetic wave energy originated from the reader/writer is often fixed to 13.56 MHz for example. However, in the case that such a contactless IC card is placed in a wallet that is holding multiple contactless IC cards having different uses, with the reader/writer laid flat on the other card, the influence of mutual inductance between the other contactless IC cards stored in the wallet can cause the tuning frequency of the contactless IC card to be reduced to a frequency of less than 13.56 MHz. Thus, assuming that multiple contactless IC cards will be used while stored in a wallet, a contactless IC card has been proposed in which the tuning frequency is fixed to 13.56 MHz by moving the tuning frequency thereof to a higher frequency (e.g. see Japanese Unexamined Patent Application Publication No. 2005-197890) (Fig. 2).

However, if the tuning frequency of the contactless IC card is fixed so as to be 13.56 MHz, as shown below, the data transfer speed between the contactless IC card and the reader/writer can reach a higher speed.

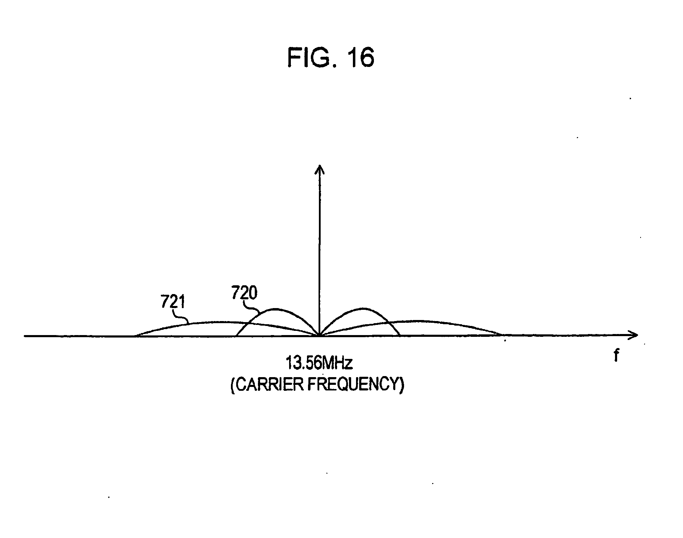

Fig. 16 is a concept diagram illustrating modulated waves at the time of low-speed and high-speed communication transmitted from a reader/writer according to related art. The modulated waves 720 and 721 of the reader/writer are illustrated with a solid line and broken line respectively, and the horizontal axis shows frequency and the vertical axis shows electromagnetic wave intensity. Also, the carrier wave frequency is 13.56 MHz.

The modulated waves 720 and 721 of the reader/writer are frequency components of the data signals to be transmitted to the contactless IC card, and are originated on both sides with a carrier wave frequency of the carrier wave to transport a data signal in the center. Also, the modulated waves 720 and 721 of the reader/writer are modulated waves at the time of low-speed communication and high-speed communication respectively. The high-speed communication mentioned here refers to communication where the data transfer speed between the reader/writer and the contactless IC card is 1600 Kbps or greater.

Thus, with a higher-speed data transfer speed between the reader/writer and the contactless IC card, the frequency bandwidth of the modulated wave 721 of the reader/writer spreads out so as to be farther from the carrier wave frequency as compared to the modulated wave 720 of the reader/writer. Additionally, we can see that the peak level of the modulated wave 721 of the reader/writer is decreased only the amount that the frequency bandwidth of the modulated wave widens. This is because the output level of the electromagnetic wave decreases in accordance with the gain of the antenna decreasing as the wave move farther from the carrier wave frequency, due to the antenna property of the reader/writer. Next, high-speed communication with a contactless IC card according to related art will be described briefly.

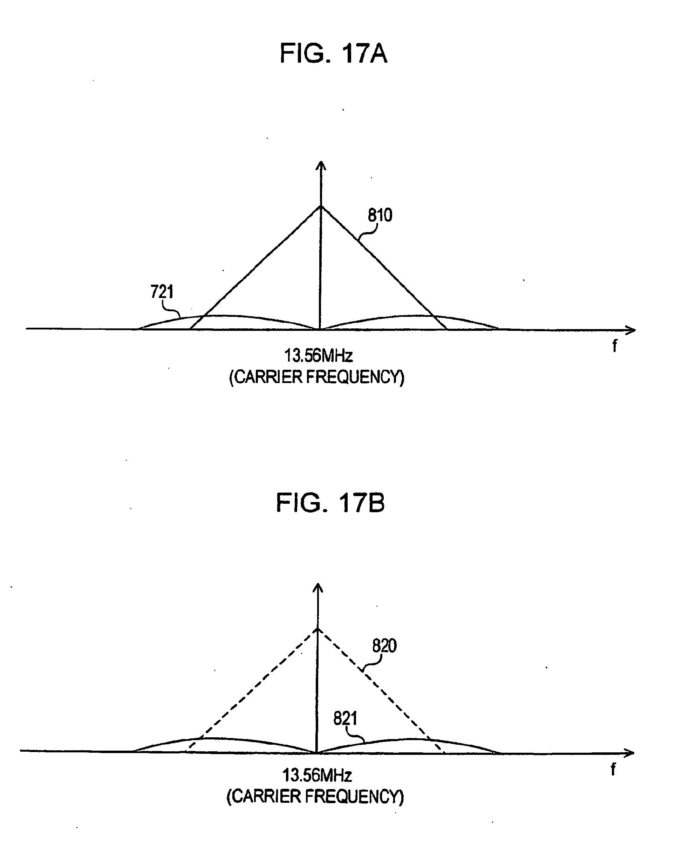

Fig. 17 is a concept diagram to illustrate frequency properties of the antenna on a contactless IC card according to related art. The carrier wave frequency here is 13.56 MHz. Also, the horizontal axis shows frequency and the vertical axis shows gain.

Fig. 17A is a concept diagram illustrating the frequency property of the antenna on a contactless IC card according to related art at time of receiving. The relation between a reception frequency property 810 of the contactless IC card according to related art and the modulating wave 721 of the reader/writer at time of high-speed communication as shown in Fig. 16 is shown in Fig. 17A, and the reception frequency property 810 of the contactless IC card is shown with a solid line, and the modulating wave of the reader/writer is shown with a broken line.

The reception frequency property 810 of the contactless IC card is a frequency property of the antenna of the contactless IC card in the case of receiving an electromagnetic wave originated from the reader/writer, and the vertical axis shows gain. The frequency wherein the gain of the reception frequency property 810 is the highest is the tuning frequency here, and the tuning frequency thereof is set to the same frequency as the carrier wave frequency.

In this case, the frequency bandwidth of the modulating wave 721 of the reader/writer at time of high-speed communication is wider as compared to the reception frequency property 810 of the contactless IC card according to related art, and the electromagnetic intensity of the modulated wave 721 thereof is lower, whereby receiving the modulated wave 721 with the contactless IC card according to related art is difficult. Thus, as a method to enable receiving a low-level modulated wave with the contactless IC card, increasing the size of the circuit can be considered to increase data detection accuracy, but this causes power consumption to increase accordingly. Accordingly, with a contactless IC card that does not have a power source, increasing the size of the circuit to increase detection accuracy of the data signal from the reader/writer is difficult.

On the other hand, as shown in Fig. 17B, in the case that the data is able to be received from the reader/writer, a modulated wave 821 at the time of high-speed communication from the contactless IC card having a transmission frequency property 820 is transmitted to the reader/writer. At this time, the reader/writer has a power source different from the contactless IC card, whereby data detection accuracy can be increased by increasing circuit size, thereby enabling receiving the modulated wave 821 from the contactless IC card.

Thus, in the case of performing high-speed communication between the reader/writer and the contactless IC card, if the tuning frequency of the contactless IC card is fixed to the carrier wave frequency as with the related art, receiving data at time of high speed communication from the reader/writer is difficult with the contactless IC card.

US-A-5.374.930 discloses a transponder for communicating with an interrogator which has a high Q-factor resonant circuit of frequency f1 for receiving RF power signals. The transponder also has a tuning circuit which, when in electrical communication with the resonant circuit, is operable to form a lower Q-factor resonant circuit of frequency f3 for receiving RF communications from the interrogator unit. This present is acknowledged in the preamble of the independent claims.

US-A-2007/0013483 discloses a tunable resonant circuit for a radio frequency identification (RFID) reader, wherein the reader transmits an activation signal to a transponder. The tunable resonant circuit comprises at least one resonant frequency-determining element and a dynamic tuning network in series with the resonant frequency-determining element for tuning the resonant circuit to a first resonant frequency value when the activation signal is on and to a second resonant frequency value when the activation signal is off.

US-A-5.905.444 discloses an anti-theft system for a motor vehicle comprising a transceiver with an antenna oscillating circuit that generates a magnetic field which inductively charges a charge capacitor of a transponder through a transponder oscillating circuit. A frequency-modulated oscillation is thereupon generated In the transponder and that oscillation is transmitted back to the transceiver. In order to ensure that the transceiver will receive the highest possible amplitudes of the frequency-modulated oscillation, the resonant frequency of the antenna oscillating circuit is adapted to the oscillation frequencies of the transponder oscillating circuit.

US-A-5.168.282 discloses an antenna resonant circuit for use in a transmitting/receiving device which in a transmitting operating phase transmits HF signals of high power and in a receiving operating phase receives HF signals of low power.

### SUMMARY OF THE INVENTION

With the above-described related art, stabilized communication can be performed by fixing the tuning frequency of the contactless IC card and the carrier wave frequency so as to match one another. However, when the tuning frequency of the contactless IC card and the carrier wave frequency are fixed as with the related art, increasing the data transfer speed between the contactless IC card and the carrier wave frequency to a high speed becomes difficult. Accordingly, description will be given for a case of moving the tuning frequency of the contactless IC card from the carrier wave frequency, with reference to the next diagram.

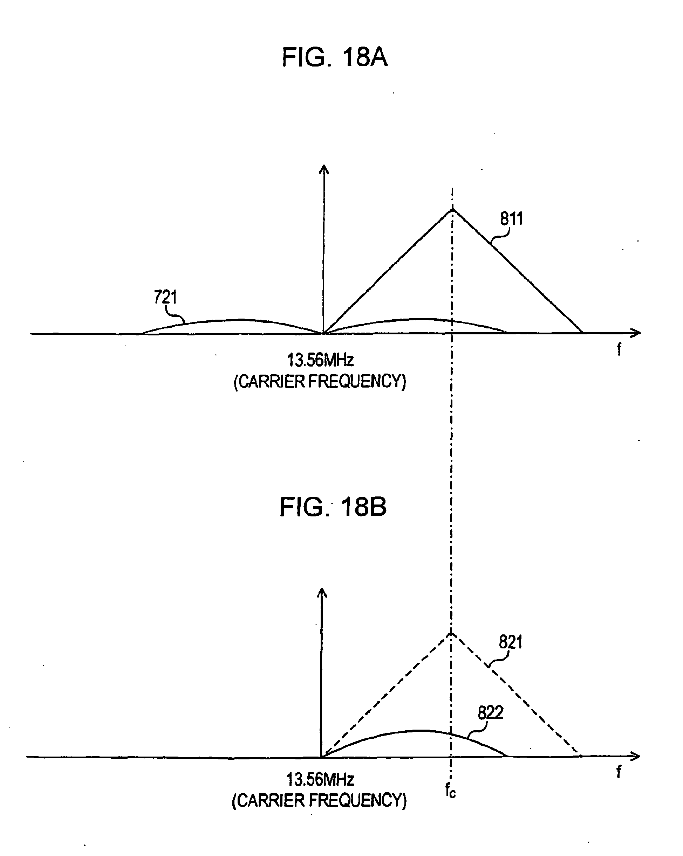

Figs. 18A and 18B are concept diagrams illustrating frequency properties of a contactless IC card in the case of moving the tuning frequency of the contactless IC card from the carrier wave frequency. The carrier wave frequency is 13.56 MHz. Also, the horizontal axis shows the frequency.

Fig. 18A shows the relation between a reception frequency property 810 of the contactless IC card and a modulating wave 721 of a reader/writer at time of high-speed communication as shown in Fig. 16.

A reception frequency property 811 of the contactless IC card is a frequency property of the antenna of the contactless IC card in the case of receiving electromagnetic waves originating from the reader/writer, and the vertical axis shows the gain. The tuning frequency of the reception frequency property 810 is set to a frequency (f_{c}) higher than the carrier wave frequency so that only the sideband with high frequency with the modulating wave 721 can be received. Thus, with the contactless IC card, only one of the sidebands of the modulating wave 721 of the reader/writer is received, but with the antenna gain of the contactless IC card, the reception level of the sideband thereof is high. Therefore, the contactless IC card can secure sufficient energy to detect high-speed data at time of high-speed communication from the reader/writer. Thus, the contactless IC card can detect high-speed data from the reader/writer by moving the tuning frequency of the contactless IC card from the carrier wave frequency.

However, in this case, even if the data received with the contactless IC card is processed and replied with the same data transfer speed to the reader/writer, the replied data signal is not received. This is because when moving the tuning frequency of the contactless IC card from the carrier wave frequency, as shown in Fig. 18B, the transmission frequency property 821 of the contactless IC card also assumes the same tuning frequency (f_{c}) as the reception frequency property 811. Specifically, when the data signal for responding to the reader/writer is replied from the contactless IC card, the frequency component of the data signal thereof is only one of the sidebands 822 of the modulating wave. In this case, the tuning frequency (f_{c}) of the antenna at time of transmission of the contactless IC card moves to the sideband 822 side, whereby the electromagnetic intensity of the sideband 822 becomes high. However, with the reader/writer, sufficient energy is not obtained with only one sideband 822, whereby detecting data from the contactless IC card is difficult.

Thus, in the case of performing high-speed communication, if the tuning frequency of the contactless IC card is changed from the carrier wave frequency and fixed, a problem occurs wherein response data is not received from the contactless IC card.

There has been realized demand for higher-speed communication between a transponder and an interrogator.

According to an embodiment of the present invention, with a transponder comprising the features of claim 1 including an antenna circuit to perform communication with an interrogator, which is a communication subject, via electromagnetic waves, the antenna circuit is made up of a coil and a variable capacity circuit which are parallel connected, wherein the tuning frequency thereof is a first frequency; and a tuning frequency control circuit to switch the tuning frequency of the parallel connected coil and variable capacity circuit is switched to a second frequency in the case of transmitting electromagnetic waves with the antenna circuit. This brings about action wherein, in the case of transmitting electromagnetic waves, the tuning frequency is switched from the first frequency to the second frequency.

Upon the data processing of the data received from the interrogator ending, the tuning frequency control circuit may switch the tuning frequency to the second frequency before transmitting the electromagnetic waves with the antenna circuit. This brings about action to switch the tuning frequency to the second frequency before transmitting the electromagnetic wave. In this case, the tuning frequency control circuit may switch the tuning frequency to the first frequency after transmitting results of the data processing to the interrogator via the antenna circuit. This brings about action to switch the tuning frequency to the first frequency after transmitting the results of the data processing to the interrogator.

In a case wherein, upon ending the data processing of the data transmitted from the interrogator, the tuning frequency control circuit switches the tuning frequency to the second frequency before transmitting the electromagnetic waves with the antenna circuit, the tuning frequency control circuit may switch the tuning frequency to the first frequency in the case that the power voltage generated by alternating current voltage induced in the antenna circuit via the electromagnetic wave originating from the interrogator is below a predetermined voltage. This brings about action to switch the tuning frequency to the first frequency in the case that the power voltage generated by the alternating current voltage induced in the antenna circuit is below a predetermined voltage.

Also, the first frequency may be set to a frequency higher than the peak of a sideband with a high frequency, of the sidebands transmitted from the interrogator. This brings about action to enable data signals from the interrogator to be readily received.

Also, the first frequency may be set to a frequency lower than the peak of a sideband with a low frequency, of the sidebands transmitted from the interrogator. This brings about action to enable data signals from the interrogator to be readily received.

Also, the tuning frequency control circuit may switch the tuning frequency to the second frequency by controlling the variable capacity circuit. This brings about action to switch the tuning frequency to the second frequency by changing the capacity of the variable capacity circuit.

Also, the variable capacity circuit may include a first fixed capacitative element connected in series to a switch, and a second fixed capacitative element connected in parallel to the series connected first fixed capacitative element and switch; wherein the tuning frequency control circuit may change the capacity of the variable capacity circuit by controlling the switch, and switch the tuning frequency to the second frequency.

Also, the variable capacity circuit may include a variable capacity diode, wherein the tuning frequency control circuit may switch the tuning frequency to the second frequency by controlling the capacity of the variable capacity diode. This brings about action to switch the tuning frequency to the second frequency by controlling the capacity of the variable capacity diode.

According to an embodiment of the present invention, an interrogator includes the features of claim 10.

This brings about action to switch the tuning frequency to the first frequency in the case of transmitting electromagnetic waves, and to switch the tuning frequency to the second frequency in the case of receiving electromagnetic waves.

Also, the tuning frequency control circuit may switch the tuning frequency of the antenna circuit to the second frequency after transmitting the data to be transmitted to the transponder via the antenna circuit. This brings about action to switch the tuning frequency of the antenna circuit to the second frequency after transmitting the data to be transmitted to the transponder. In this case, the tuning frequency control circuit may switch the tuning frequency of the antenna circuit to the first frequency before transmitting an electromagnetic wave from the antenna circuit, upon processing of the response data as to the data from the transponder ending. This brings about action to switch the tuning frequency to the first frequency after transmitting the electromagnetic waves from the antenna circuit data.

Also, the first frequency may be set to a frequency higher than the peak of a sideband with a high frequency, of the sidebands transmitted from the antenna circuit. This brings about action to further increase the peak level of the sideband having a high frequency.

Also, the first frequency may be set to a frequency lower than the peak of a sideband with a low frequency, of the sidebands transmitted from the antenna circuit. This brings about action to further increase the peak level of the sideband having a high frequency.

Also, the tuning frequency control circuit may switch the tuning frequency of the antenna circuit to the first or second frequency by controlling the variable capacity circuit. This brings about action to switch the tuning frequency to the first or second frequency by changing the capacity of the variable capacity circuit.

Also, the variable capacity circuit includes a first fixed capacitative element and switch connected directly, and a second fixed capacitative element connected serially to the directly connected first fixed capacitative element and switch; wherein the tuning frequency control circuit may change the capacity of the variable capacity circuit by controlling the switch, and switch the tuning frequency of the antenna circuit to the first or second frequency. This brings about action to switch the tuning frequency to the first or second frequency by controlling the switch of the variable capacity circuit.

Also, the variable capacity circuit includes a variable capacity diode, wherein the tuning frequency control circuit switches the tuning frequency of the antenna circuit to the first or second frequency by controlling the capacity of the variable capacity diode. This brings about action to switch the tuning frequency to the first or second frequency by controlling the capacity of the variable capacity diode.

According to an embodiment of the present invention, a communication device includes: an antenna circuit made up of a coil and a variable capacity circuit which are parallel connected to perform communication with another communication device, which is a communication subject, via electromagnetic waves; and a tuning frequency control circuit to switch the tuning frequency of the antenna circuit to a first frequency in the case of receiving an electromagnetic wave originating from the other communication device, and a second frequency in the case of transmitting the electromagnetic waves transmitted with the antenna circuit. This brings about action to switch the tuning frequency to the first frequency in the case of receiving electromagnetic waves, and to the second frequency in the case of transmitting electromagnetic waves.

According to the above configurations, excellent advantages can be obtained in that communication speed between an interrogator and transponder can be performed at increasingly high speed.

### BRIEF DESCRIPTION OF THE DRAWINGS

Fig. 1 is a concept diagram illustrating a configuration example of a contactless IC card according to an embodiment of the present invention;
Fig. 2 is a concept diagram illustrating a configuration example of a tuning frequency adjusting circuit of a first example of a contactless IC card according to an embodiment of the present invention;
Fig. 3 is a concept diagram illustrating a configuration example of a tuning frequency control circuit of a first example of a contactless IC card according to an embodiment of the present invention;
Figs. 4A and 4B are concept diagrams schematically illustrating frequency properties of an antenna in Figs. 2 and 3;
Fig. 5 is a concept diagram schematically illustrating frequency properties of the antenna at time of receiving in the case of using a p-type transistor serving as a switch 213;
Fig. 6 is a flowchart illustrating a processing sequence example of tuning frequency control processing of the contactless IC card according to an embodiment of the present invention;
Fig. 7 is a concept diagram illustrating a configuration example of a tuning frequency adjusting circuit of a second example of a contactless IC card according to an embodiment of the present invention;
Fig. 8 is a concept diagram illustrating a configuration example of a tuning frequency control circuit of a second example of a contactless IC card according to an embodiment of the present invention;
Fig. 9 is a concept diagram illustrating a configuration example of a reader/writer according to an embodiment of the present invention;
Fig. 10 is a concept diagram illustrating a configuration example of a first example of a reader/writer according to an embodiment of the present invention;
Fig. 11 is a concept diagram illustrating a configuration example of a tuning frequency control circuit of a first example of a reader/writer according to an embodiment of the present invention;
Figs. 12A and 12B are concept diagrams schematically illustrating frequency properties of an antenna in Figs. 10 and 11;
Fig. 13 is a concept diagram schematically illustrating frequency properties of the antenna at time of transmitting in the case of using a p-type transistor as a switch 513;
Fig. 14 is a flowchart illustrating a processing sequence example of tuning frequency control processing of the reader/writer according to an embodiment of the present invention;
Fig. 15 is a concept diagram illustrating a configuration example of a tuning frequency adjusting circuit of a second example of a reader/writer according to an embodiment of the present invention;
Fig. 16 is a concept diagram illustrating a modulating wave at time of low-speed and high-speed communication transmitted from a reader/writer according to related art;
Figs. 17A and 17B are concept diagrams illustrating frequency properties of an antenna of a contactless IC card according to related art; and
Figs. 18A and 18B are concept diagrams illustrating frequency properties of a contactless IC card in the case of moving the tuning frequency of the contactless IC card from a carrier wave frequency.

### DESCRIPTION OF THE PREFERRED EMBODIMENTS

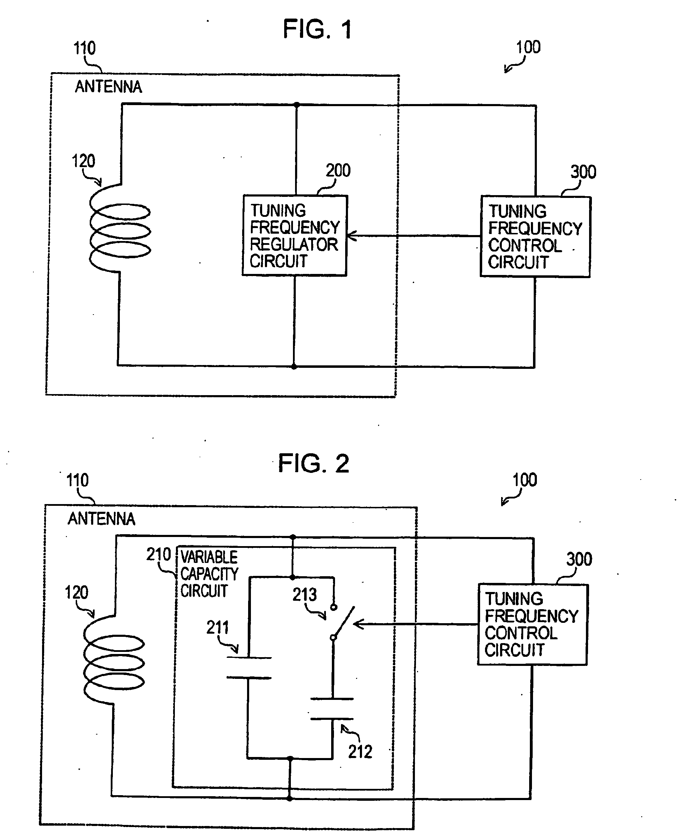

Next, embodiments of the present invention will be described in detail with reference to the appended diagrams. Fig. 1 is a concept diagram illustrating a configuration example of a contactless IC card according to an embodiment of the present invention. It is assumed here that the data transfer speed between the contactless IC card and the reader/writer is mutually the same and that the speed is high speed, and the data transfer speed is 1696 Kbps, for example.

The contactless IC card 100 performs communication with the reader/writer via electromagnetic waves, and has an antenna 110 and tuning frequency control circuit 300. The antenna 110 receives electromagnetic waves originating from the reader/writer that is to be subject to communication, and transmits electromagnetic waves to the reader/writer corresponding thereto. The antenna 110 is a tuning circuit made up of a coil 120 parallel connected to a tuning frequency adjusting circuit 200. The frequency wherein the electromagnetic wave generated from the antenna 110 is at the highest intensity is the tuning frequency, and the tuning frequency thereof is determined by the coil 120 and the capacity of the tuning frequency adjusting circuit 200, which are parallel connected to each other.

The tuning frequency adjusting circuit 200 varies capacity based on signals from the tuning frequency control circuit 300. The tuning frequency adjusting circuit 200 is configured such that the tuning frequency of the antenna 110 changes as the capacity of the tuning frequency adjusting circuit 200 is changed.

The tuning frequency control circuit 300 switches the tuning frequency of the antenna 110 between the time of receiving and time of transmitting electromagnetic waves by controlling the capacity of the tuning frequency adjusting circuit 200. For example, the tuning frequency control circuit 300 receives data to be transmitted from the reader/writer, and upon data processing of such data ending, the tuning frequency control circuit 300 switches the tuning frequency of the antenna 110 before transmitting the electromagnetic waves to the transmission frequency for transmission. The transmitting frequency is assumed to match the carrier wave frequency in order to readily receive data signals from the contactless IC card with the reader/writer. The carrier wave frequency here is 13.56 MHz for example.

Also, upon transmitting the results of the processed data from the reader/writer as response data to the reader/writer via the antenna 110, the tuning frequency control circuit 300 switches the tuning frequency of the antenna 110 to the reception frequency to receive the electromagnetic waves from the reader/writer. The reception frequency is assumed to be a frequency that can receive one of the sidebands of the modulated waves originated from the reader/writer, e.g. approximately 17.30 MHz. Note that the modulated wave mentioned here is a frequency component generated by superimposing the carrier wave on the data with the reader/writer, and appears symmetrically on both sides of the carrier wave frequency. The frequency component appearing on the frequency lower than the carrier wave frequency is the lower sideband and the frequency component appearing on the frequency higher than the carrier wave frequency is the upper sideband.

Also, in the case that the power voltage generated through the electromagnetic waves originating from the reader/writer is lower than a predetermined voltage, the tuning frequency control circuit 300 switches the tuning frequency of the antenna 110 to the reception frequency.

For example, in the case that the distance from the reader/writer increases and the power voltage drops below the predetermined voltage in a situation wherein the tuning frequency of the antenna 110 is switched to the transmission frequency and the response data is transmitted to the reader/writer, the tuning frequency control circuit 300 switches the tuning frequency of the antenna 110 to the reception frequency. Thus, before the power voltage is generated through the electromagnetic wave originated from the reader/writer, a situation can be arranged so that the data from the reader/writer can be readily received.

Thus, by switching the tuning frequency of the antenna 110 between the time of transmission and the time of receiving, the data transfer speed between the contactless IC card 100 and the reader/writer can be at a higher speed.

Next, a configuration example of the tuning frequency adjusting circuit 200 will be described with reference to the next drawing. Fig. 2 is a concept diagram illustrating a configuration example of a tuning frequency adjusting circuit 200 of a first example of a contactless IC card 100 according to an embodiment of the present invention. The contactless IC card 100 has a coil 120, a variable capacity circuit 210, and a tuning frequency control circuit 300.

The configuration thereof other than the variable capacity circuit 210 is the same as that in Fig. 1, so the description thereof will be omitted here.

The variable capacity circuit 210 has fixed capacitative elements 211 and 212 and a switch 213. The variable capacity circuit 210 changes the capacity of the variable capacity circuit 210 by switching the switch 213 to a conductive state or a non-conductive state based on a signal from the tuning frequency control circuit 300. For example, in the case of receiving data from the reader/writer, the tuning frequency control circuit 300 switches the switch 213 to a non-conductive state, thereby setting the tuning frequency that is determined from the coil 120 and fixed capacitative element 211 to the reception frequency. On the other hand, in the case of transmitting response data to the reader/writer, the tuning frequency control circuit 300 switches the switch 213 to a conductive state, thereby setting the tuning frequency that is determined from the synthesized capacity of the coil 120 and fixed capacitative elements 211 and 212 as the transmission frequency.

Note that in this case, the fixed capacitative elements 211 and 212 added together become the synthesized capacity, and the capacity of the variable capacity circuit 210 is great at the time of transmission, whereby the transmission frequency of the antenna 110 is lower than the reception frequency. The transmission frequency is set to the same frequency as the carrier wave frequency so that the reader/writer can receive the response data. Accordingly, the reception frequency is set to a frequency higher than the carrier wave frequency, whereby the reception frequency is set so as to receive the upper sideband from the reader/writer.

Thus, with the first example of the contactless IC card 100 according to an embodiment of the present invention, the capacity of the variable capacity circuit 210 is changed by using the fixed capacitative elements 211 and 212 and the switch 213. Thus, the tuning frequency of the antenna 110 can be switched between the time of transmitting and time of receiving the tuning frequency of the antenna 110.

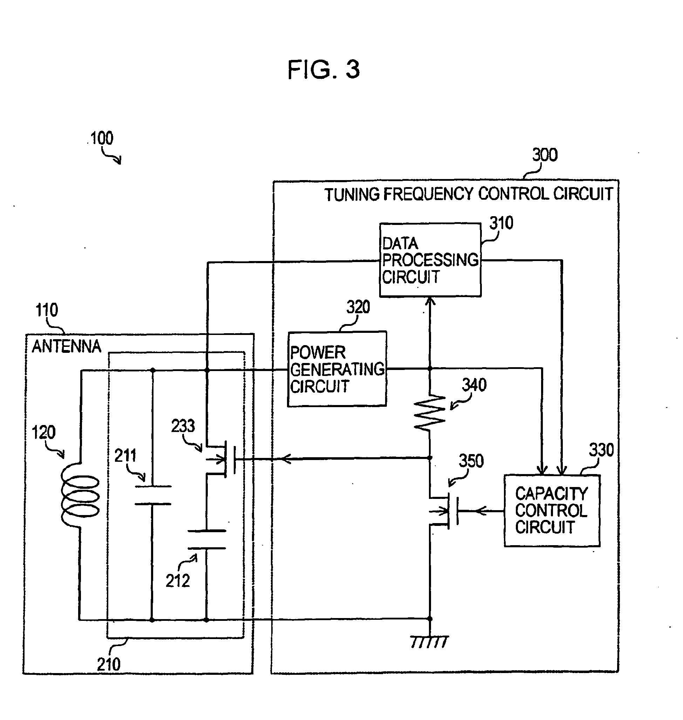

Next, a configuration example of the tuning frequency control circuit 300 will be described with reference to the next drawing. Fig. 3 is a diagram illustrating a configuration example of the tuning frequency control circuit 300 of a first example of a contactless IC card 100 according to an embodiment of the present invention. With the configuration shown in Fig. 2, a configuration example of the tuning frequency control circuit 300 and an n-type transistor 233 instead of the switch 213 of the variable capacity circuit 210 are shown here. The configuration otherwise is the same as that shown in Fig. 2, so the description thereof will be omitted here.

The variable capacity circuit 210 has an n-type transistor 233 instead of the switch 213. The n-type transistor 233 functions as a switch such that the variable capacity circuit 210 is in a conductive state when H (High) level potential is applied to the gate terminal thereof, and the variable capacity circuit 210 is in a non-conductive state when L (Low) level potential is applied to the gate terminal thereof.

The tuning frequency control circuit 300 has a data processing circuit 310, power generating circuit 320, capacity control circuit 330, resistor 340, and n-type transistor 350.

The data processing circuit 310 executes data processing upon receiving data from the reader/writer via the antenna 110, and replies to the reader/writer with the response data via the antenna 110. Upon ending the data processing, the data processing circuit 310 outputs ending notification thereof to the capacity control circuit 330. Also, upon the reply of the response data to the reader/writer ending, the data processing circuit 310 outputs a reply end notification thereof to the capacity control circuit 330. Also, the data processing circuit 310 generates a response data signal with a predetermined data transmission speed, e.g. 1696 Kbps.

The power generating circuit 320 generates direct current voltage serving as the power voltage by rectifying the alternating current voltage induced to the antenna 110 with the electromagnetic waves originating from the reader/writer. The power generating circuit 320 supplies the generated power voltage to the data processing circuit 310, capacity control circuit 330, and resistor 340.

The n-type transistor 350 functions as a switch so as to be in a conductive state when H-level potential is applied to the gate terminal thereof, and in a non-conductive state when L-level potential is applied to the gate terminal thereof. With the n-type transistor 350, the source terminal thereof is connected to one of the terminals of the resistor 340 and the gate terminal of the n-type transistor 233, and a drain terminal is grounded.

The resistor 340 reduces the power voltage supplied from the power generating circuit 320 when the n-type transistor 350 is in a conductive state. In this case, 0V (volts) are supplied to the gate terminal of the n-type transistor 233 as a L-level. Note that when the n-type transistor 350 is in a non-conductive state, current does not flow to the resistor 340, whereby the power voltage supplied from the power generating circuit 320 is supplied to the gate terminal of the n-type transistor 233. Also, one of the terminals of the resistor 340 is connected to the drain terminal of the n-type transistor 350 and gate terminal of the n-type transistor 233, and the other terminal thereof is connected to the data processing circuit 310, power generating circuit 320, and capacity control circuit 330.

The capacity control circuit 330 applies H-level or L-level potential to the gate terminal of the n-type transistor 350. For example, upon power potential being supplied from the power generating circuit 320, the capacity control circuit 330 applies H-level potential to the gate terminal of the n-type transistor 350. In this case, the n-type transistor 350 conducts, and the gate terminal of the n-type transistor 233 is L-level, whereby the n-type transistor 233 is non-conductive. Thus, the tuning frequency control circuit 300 can have the tuning frequency of the antenna 110 that is determined from the fixed capacitative element 211 and coil 120 to be set as the reception frequency.

Also, upon ending notification of the data processing being output from the data processing circuit 310, the capacity control circuit 330 applies L-level potential to a gate terminal of the n-type transistor 350. In this case, the n-type transistor 350 is non-conductive, and power voltage is supplied as an H-level potential to the gate terminal of the n-type transistor 233, whereby the n-type transistor 233 conducts. Thus, the tuning frequency control circuit 300 can have the tuning frequency of the antenna 110 that is determined from the synthesized capacity of the fixed capacitative elements 211 and 212 and the coil 120 to be set as the transmission frequency.

Also, upon a reply-end notification of the response data being output from the data processing circuit 310, the capacity control circuit 330 applies H-level potential to a gate terminal of the n-type transistor 350. In this case, the n-type transistor 350 conducts, and the gate terminal of the n-type transistor 233 is L-level, whereby the n-type transistor 233 is non-conductive. Thus, the tuning frequency control circuit 300 can have the tuning frequency of the antenna 110 that is determined from the fixed capacitative element 211 and coil 120 to be set as the reception frequency.

Thus, if the distance between the contactless IC card 100 and reader/writer is a certain distance, the power voltage is smaller than the moving voltage of the contactless IC card. In this case, the n-type transistor 233 is non-conductive, and the tuning frequency of the antenna 110 is set to the reception frequency which is determined from the fixed capacitative element 211 and coil 120. Thus, in the event of newly starting communication between the reader/writer, the tuning frequency of the antenna 110 is set to the reception frequency, whereby the tuning frequency control circuit 300 can receive data from the reader/writer.

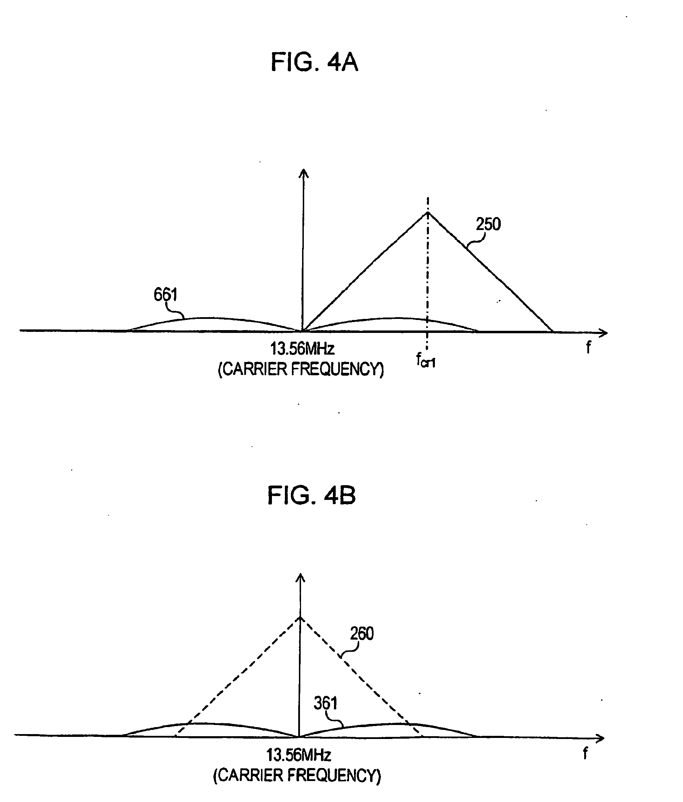

Next, the frequency properties of the antenna 110 will be described with reference to the next diagram. Figs. 4A and 4B are concept diagrams schematically illustrating frequency properties of an antenna 110 in Figs. 2 and 3. The carrier wave frequency here is 13.56 MHz. Also, the horizontal axis is shown as the frequency.

Fig. 4A is a concept diagram showing the frequency property of the antenna 110 at time of reception. The relation between the reception frequency property 250 of the contactless IC card and the modulating wave 661 of the reader/writer is shown here, and the reception frequency property 250 of the contactless IC card is shown with a solid line, and the modulating wave 661 of the reader/writer is shown with a broken line.

The modulating wave 661 of the reader/writer is a frequency component of the data signal originating from the reader/writer, and is generated symmetrically on both sides of the carrier wave frequency. The frequency component appearing on the frequency lower than the carrier wave frequency is the lower sideband and the frequency component appearing on the frequency higher than the carrier wave frequency is the upper sideband.

The reception frequency property 250 of the contactless IC card is the frequency property of the antenna 110 at time of reception, and the vertical axis is shown as the gain. The frequency (f_{cr1}) of the reception frequency property 250 of the contactless IC card with the highest gain is the tuning frequency, and the tuning frequency thereof (f_{cr1}) is the reception frequency. The reception frequency property 250 of the contactless IC card is set so as to readily receive the upper sideband of the modulating wave 661, whereby the reception frequency (f_{cr1}) is set to a frequency that is at least higher than the peak of the upper sideband. This is because the frequency components higher than the upper sideband peak are equivalent to the high frequency component of the data signal, whereby the frequency components higher than the peak of the upper sideband can be more readily received and therefore the data signal more readily detected. However, if the reception frequency (f_{cr1}) is excessively higher than the frequency of the peak of the upper sideband, energy is not received from the carrier wave. The reception frequency is therefore set in view of this situation. Thus, by setting the reception frequency to a frequency higher than the upper sideband, a high-speed data signal can be received from the reader/writer.

Note that the frequencies of the peaks of the upper/lower sidebands change according to the values of the continuous bits of the data signal, but here we assume a case wherein the peaks of the upper/lower sidebands are farthest from the carrier wave frequency. For example, if we assume a transfer method which subjects the data signal that has been Manchester-encoded to amplification modulation, in the case that the peaks of the upper/lower sidebands are farthest from the carrier wave frequency, this applies to the time that data signal bits randomly occur. The peaks of the upper/lower sidebands at this time are distanced from the carrier wave frequency only the frequency of the clock signal generating the data transfer speed. Accordingly, for example, if the frequency of the clock signal generating the data transfer speed is 1.696 MHz, the frequency of the peaks of the upper/lower sidebands is 15.256 (= 13.560 + 1.696) MHz, whereby the reception frequency (f_{cr1}) is set to a frequency at least higher than 15.256 MHz.

Fig. 4B is a concept diagram illustrating the frequency property of the antenna 110 at time of transmission. The relation between the transmission frequency property 260 of the contactless IC card and the modulating wave 361 of the contactless IC card is shown here, and the transmission frequency property 260 of the contactless IC card is shown with a solid line, and the modulating wave 361 of the contactless IC card is shown with a broken line. The transmission frequency property 260 of the contactless IC card is a frequency property in the case that electromagnetic waves are transmitted from the antenna 110, and the vertical axis shows gain. The transmission frequency which is the tuning frequency of the transmission frequency property 260 of the contactless IC card is set to the same frequency as the carrier frequency.

Thus, by setting the transmission frequency to be the same frequency as the carrier wave frequency, the modulating wave generated with the data signals of the contactless IC card 100 can be received with the reader/writer.

Note that with the first example of the contactless IC card 100 according to an embodiment of the present invention, description is given for an example to set the reception frequency of the antenna 110 so that the upper sideband can be more readily received, but settings may be performed so that the lower sideband can be more readily received. In this case, this can be realized by using a p-type transistor which operates as the opposite of an n-type transistor 233, instead of the n-type transistor 233 to serve as the switch 213. The p-type transistor is a switch that goes to a non-conductive state when an H-level potential is applied to the gate terminal thereof, and goes to a conductive state when a L-level potential is applied. For example, in the case of receiving an electromagnetic wave originating from the reader/writer, an H-level potential is applied to the gate terminal of the n-type transistor 350 from the capacity control circuit 330, the potential of the gate terminal of the p-type is L-level, and the p-type transistor conducts. Therefore, the reception frequency of the antenna 110 is determined from the synthesized capacity of the fixed capacitative elements 211 and 212 and the coil 120.

Also, in the case of transmitting response data to the reader/writer, an L-level potential is applied to the gate terminal of the n-type transistor 350 by the capacity control circuit 330, whereby the potential of the gate terminal of the p-type transistor is H-level, and the p-type transistor is non-conductive. Therefore, the transmission frequency of the antenna 110 is determined from the fixed capacitative element 211 and coil 120. Thus, the reception frequency of the antenna 110 can be set to a frequency lower than the transmission frequency. The transmission frequency is set to the same frequency as the carrier wave frequency so that the response data can be received with the reader/writer. Accordingly, the reception frequency is set so that the lower sideband of the frequency lower than the carrier wave frequency can be more readily received.

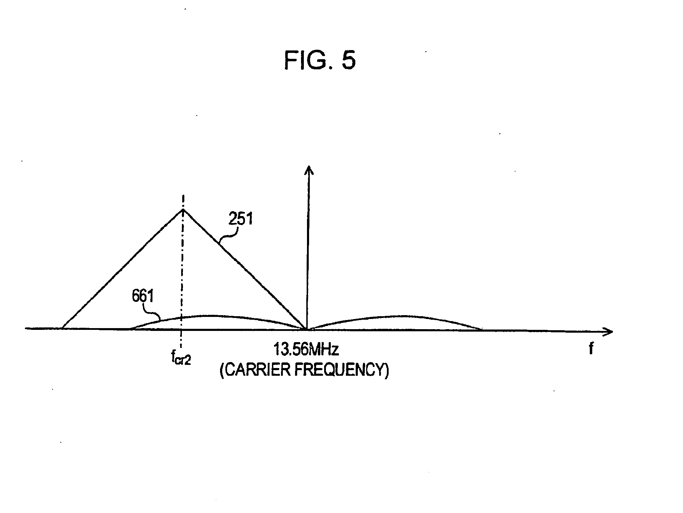

Fig. 5 is a concept diagram schematically illustrating frequency properties of the antenna 110 at time of receiving in the case of using a p-type transistor serving as a switch 213. The carrier wave frequency is shown here as 13.56 MHz. Also, the horizontal axis is shown as the frequency. Note that the modulating wave 661 of the reader/writer is the same as that shown in Fig. 4A. Also, the frequency property of the antenna 110 at time of transmission is the same as that shown in Fig. 4B, so the description thereof will be omitted here. The reception frequency property 251 is shown with a solid line, and the modulating wave 661 of the reader/writer is shown with a broken line. The reception frequency property 251 is a frequency property at the time of receiving with the antenna 110, and the vertical axis shows the gain. The frequency having the highest gain (f_{cr2}) with the reception frequency property 251 is the reception frequency.

In this case, the reception frequency property 251 is set so as to enable the lower sideband of the modulating wave 661 to be more readily received. When receiving the lower sideband, the reception frequency (f_{cr2}) is set to a frequency lower than the peak of the lower sideband, opposite from the upper sideband. This is so that the data signal is more readily detected as described above.

Thus, as a modification example of the first example, the reception frequency is set to a frequency lower than the peak of the lower sideband by using a p-type transistor serving as the switch 213, thereby enabling a high-speed data signal to be received from the reader/writer.

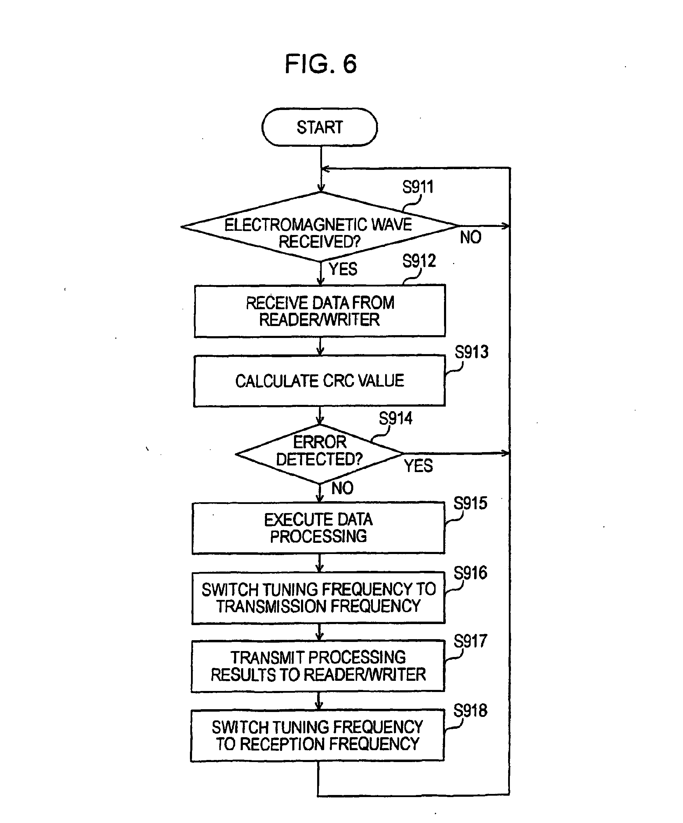

Next, the operations of the contactless IC card 100 according to an embodiment of the present invention will be described with reference to the drawings. Fig. 6 is a flowchart illustrating a processing sequence example of tuning frequency control processing of the contactless IC card 100 according to an embodiment of the present invention.

First, the flow stands by until the electromagnetic wave originating from the reader/writer is detected (step S911). Next, the electromagnetic waves are received and power voltage is supplied by the power generating circuit, and data is received from the reader/writer (step S912). The CRC value of the received data is then calculated (step S913). By confirming the CRC value, determination is made as to whether or not there is any error in the received data (step S914). In the case of any error in the received data, the flow is returned to step S911.

On the other hand, if there is no error in the received data, data processing of such data is executed (step S915). Next, upon ending the data processing, the tuning frequency of the antenna 110 is switched to transmission frequency in order to transmit the electromagnetic waves (step S916). Next, response data which is the results of the data processing of the received data is transmitted to the reader/writer (step S917). Next, upon transmitting the response data, the tuning frequency is switched to reception frequency, and the flow is returned to step S911.

Thus, each time the data is received from the reader/writer, communication is performed by switching the response data to transmission frequency before transmitting the response data to the reader/writer, and upon transmitting the response data thereof, switches to reception frequency, and repeats these operations until a series of communication is ended.

Thus, with the first example of contactless IC card 100 according to an embodiment of the present invention, the capacity of the variable capacity circuit 210 can be changed and the tuning frequency of the antenna 110 switched between time of transmission and time of reception, by using the fixed capacitative elements 211 and 212 and switch 213.

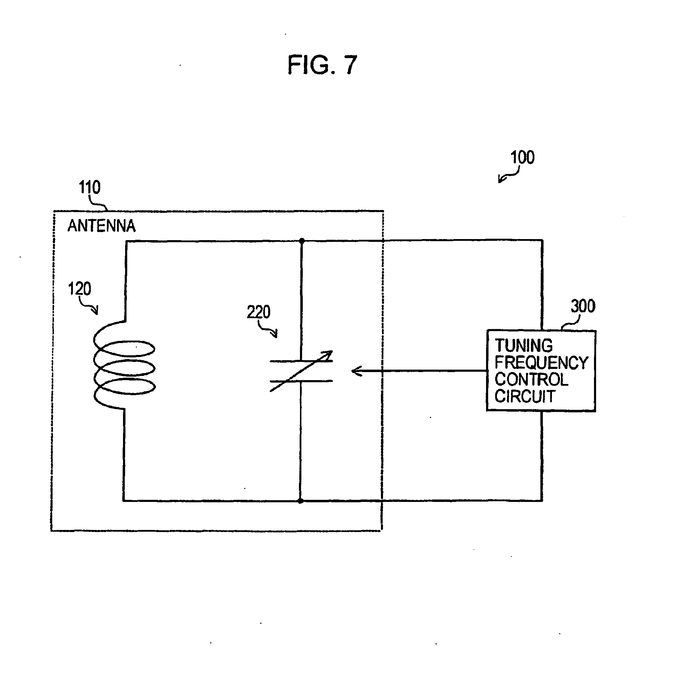

Fig. 7 is a concept diagram illustrating a configuration example of a tuning frequency adjusting circuit 200 of a second example of a contactless IC card 100 according to an embodiment of the present invention. The configuration of the contactless IC card 100 shown in Fig. 1 has a variable capacity diode 220 instead of the variable capacity circuit 210 serving as the tuning frequency adjusting circuit 200. Note that the configuration herein other than the variable capacity diode 220 is the same as that shown in Fig. 1, so the description will be omitted here.

The variable capacity diode 220 enables change to capacity according to the voltage applied by the tuning frequency control circuit 300.

Thus, by using the variable capacity diode 220, the capacity of the variable capacity diode 220 is changed and the tuning frequency of the antenna 110 switched between time of transmission and time of reception.

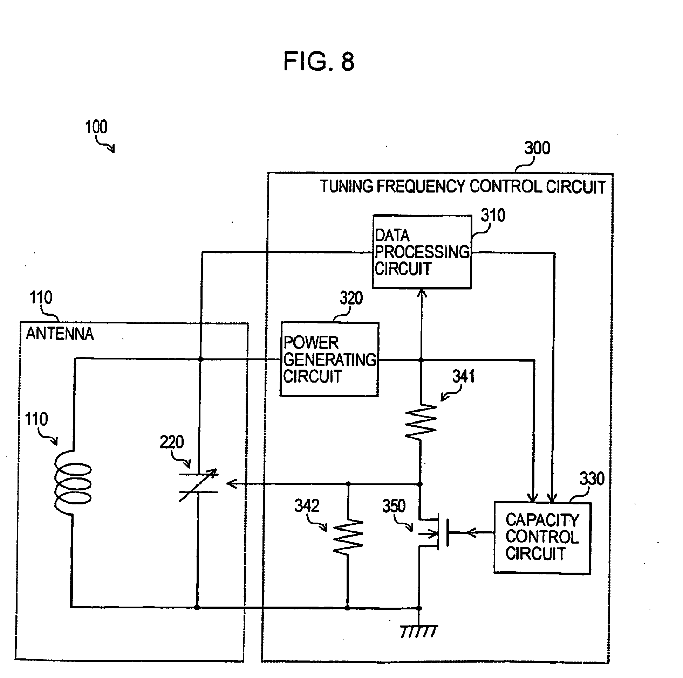

Fig. 8 is a diagram illustrating a configuration example of a tuning frequency control circuit 300 of a second example of a contactless IC card 100 according to an embodiment of the present invention. Instead of the resistor 340 shown in Fig. 3, resistors 341 and 342 are shown here. Further, the variable capacity diode 220 is shown instead of the variable capacity circuit 210.

The tuning frequency control circuit 300 has a data processing circuit 310, power generating circuit 320, capacity control circuit 330, resistors 341 and 342, and n-type transistor 350. Except for the resistors 341 and 342, the tuning frequency control circuit 300 is the same as that shown in Fig. 3, so the description herein will be omitted.

The resistor (R1) 341 and resistor (R2) 342 are to supply two different potentials to the variable capacity diode 220 based on the power voltage (Vcc) supplied by the power generating circuit 320. For example, in the case that the n-type transistor 350 is in a non-conductive state, potential that is divided by the resistors 341 and 342 (Vcc · (R2 / (R1 + R2))) is supplied as an H-level. Also, in the case that the n-type transistor 350 is in a conductive state, the current flow to the n-type transistor 350 via the resistor 341, whereby potential of 0V (volts) is supplied as an L-level to the variable capacity diode 220.

Thus, by changing the potential applied to the variable capacity diode 220 using the resistors 341 and 342 and the n-type transistor 350, the capacity of the variable capacity diode 220 is changed. Thus, as shown in Fig. 4, the tuning frequency of the antenna 110 is switched to the reception frequency (f_{cr1}) so as to receive the upper sideband at time of receiving, and to the same transmission frequency as the carrier wave frequency at time of transmission. Also, by reversing the properties of the variable capacity diode 220, the tuning frequency of the antenna 110 can be switched to a reception frequency (f_{cr2}) that can readily receive the lower sideband from the reader/writer at time of reception, as shown in Fig. 5. Also, the tuning frequency of the antenna 110 can be switched to the transmission frequency of the same frequency as the carrier wave frequency at time of transmission.

Further, with the second example of the contactless IC card 100 according to an embodiment of the present invention, the number of configuration elements to switch the tuning frequency can be reduced as compared to the first example, whereby the circuit size can be suppressed.

As described above, with the contactless IC card 100, the capacity of the tuning frequency adjusting circuit 200 is changed according to the time of reception and time of transmission of the electromagnetic waves with the tuning frequency control circuit 300, whereby the tuning frequency of the antenna 110 can be switched to the reception frequency or transmission frequency of the electromagnetic wave. An example is described of switching the tuning frequency of the contactless IC card 100 at the time of transmission and time of reception of the electromagnetic waves, thereby realizing high-speed communication between the contactless IC card and reader/writer, but this is similarly applicable to the reader/writer.

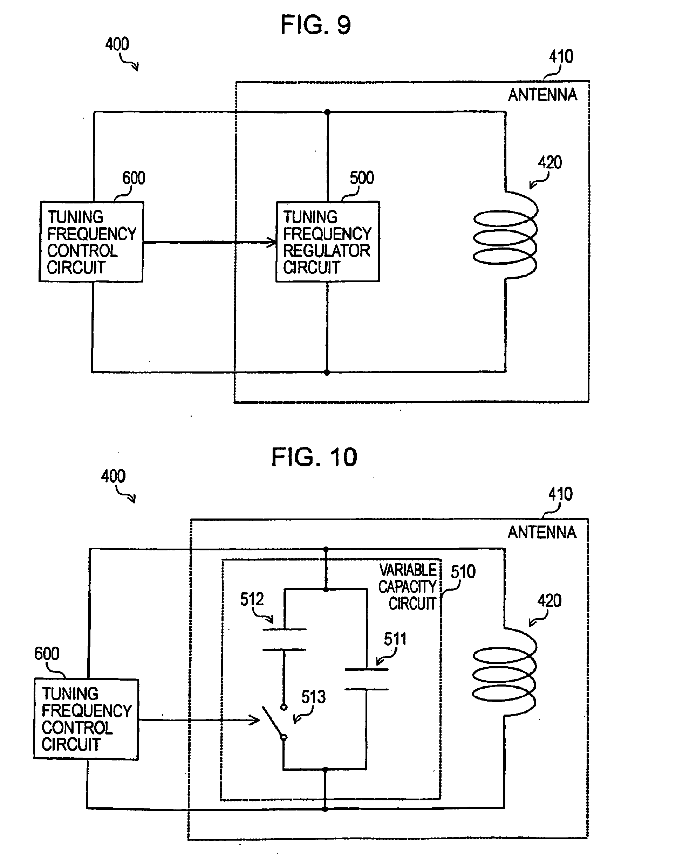

Now, an example of application to the reader/writer will be described with reference to the next diagram. Fig. 9 is a concept diagram illustrating a configuration example of a reader/writer according to an embodiment of the present invention. Let us assume that the data transfer speed between the contactless IC card and reader/writer is mutually the same and a high speed, and let us say that the data transfer speed thereof is 1696 Kbps, for example. Also, let us assume that the tuning frequency of the contactless IC card is not switched at the time of data transmission and at time of reception, but is fixed to the same frequency as that of the carrier wave frequency.

The reader/writer 400 performs communication with the contactless IC card via the electromagnetic wave, and has an antenna 410 and tuning frequency control circuit 600. The antenna 410 originates an electromagnetic wave and transmits the data to be transmitted to the contactless IC card to be subject to communication, and receives the electromagnetic wave from the contactless IC card. The antenna 410 is a tuning circuit made up of a coil 420 which is parallel connected to a tuning frequency adjusting circuit 500. The frequency having the highest electromagnetic intensity originating from the antenna 410 is the tuning frequency, and the tuning frequency thereof is determined by the coil 420 and the capacity of the tuning frequency adjusting circuit 500.

The tuning frequency adjusting circuit 500 varies capacity based on signals from the tuning frequency control circuit 600. The tuning frequency adjusting circuit 500 is configured such that the tuning frequency of the antenna 410 changes as the capacity of the tuning frequency adjusting circuit 500 is changed.

The tuning frequency control circuit 600 switches the tuning frequency of the antenna 410 between the time of transmitting and time of receiving data for communicating by controlling the capacity of the tuning frequency adjusting circuit 500. Specifically, the tuning frequency control circuit 600 switches the tuning frequency of the antenna 410 to the transmission frequency for transmitting in the event of transmitting an electromagnetic wave. Let us assume that the transmission frequency is a frequency wherein only one of the sidebands of the modulated waves originated from the reader/writer 400 is a high frequency, e.g. approximately 17.30 MHz, in order to enable data signals from the reader/writer 400 to be readily received with the contactless IC card.

Also, upon transmitting data to the contactless IC card via the antenna 410, the tuning frequency control circuit 600 switches the tuning frequency of the antenna 410 to the reception frequency for receiving response data from the contactless IC card. The reception frequency is assumed to be the same as the carrier wave frequency in order to enable readily receiving response data from the contactless IC card. The carrier wave frequency here is 13.56 MHz, for example.

Also, upon processing the response data from the contactless IC card, the tuning frequency control circuit 600 switches the tuning frequency of the antenna 410 to the transmission frequency in order to transmit data to the contactless IC card.

Thus, by switching the tuning frequency of the antenna 410 at the time of transmission and time of reception, the data transfer speed between the reader/writer 400 and contactless IC card can be increased.

Next, a configuration example of the tuning frequency adjusting circuit 500 will be described with reference to the drawings. Fig. 10 is a concept diagram illustrating a configuration example of a first example of a reader/writer 400 according to an embodiment of the present invention.

The reader/writer 400 has a coil 420, a variable capacity circuit 510, and tuning frequency control circuit 600.

The variable capacity circuit 510 has fixed capacitative elements 511 and 512 and a switch 513.

The variable capacity circuit 510 changes the capacity of the variable capacity circuit 510 by causing the switch 513 to be in a conductive or non-conductive state based on signals from the tuning frequency control circuit 600. For example, in the case of transmitting data to be transmitted to the contactless IC card via the antenna 410, the tuning frequency control circuit 600 sets the tuning frequency determined from the coil 420 and fixed capacitative element 511 as the transmission frequency by switching the switch 513 to a non-conductive state. On the other hand, in the case of receiving the response data from the contactless IC card, the tuning frequency control circuit 600 sets the tuning frequency determined from the coil 420 and the synthesized capacity of the fixed capacitative elements 511 and 512 to the reception frequency by the switch 513 conducting.

Thus, by using the fixed capacitative elements 511 and 512 and the switch 513, the capacity of the variable capacity circuit 510 is changed. Therefore, the tuning frequency of the antenna 110 can be switched at time of transmission and at time of reception.

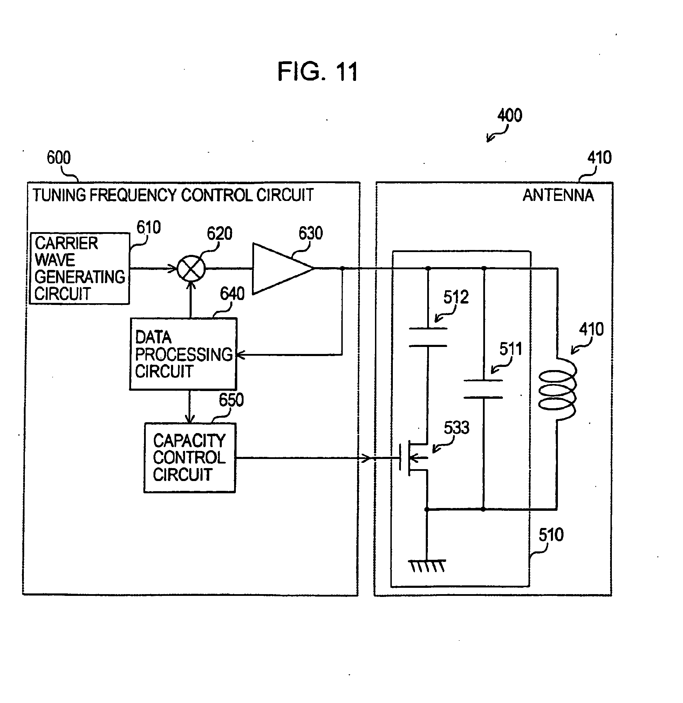

Next, a configuration example of the tuning frequency control circuit 600 will be described with reference to the next diagram. Fig. 11 is a diagram illustrating a configuration example of a tuning frequency control circuit 600 of a first example of a reader/writer 400 according to an embodiment of the present invention. With the configuration shown in Fig. 10, a configuration example of the tuning frequency control circuit 600 and an n-type transistor 533 instead of the switch 513 of the variable capacity circuit 510 are illustrated. The remaining configuration is the same as that in Fig. 10, so the description herein will be omitted.

The variable capacity circuit 510 has an n-type transistor 533 instead of the switch 510. The n-type transistor 533 is a switch that conducts when an H-level potential is applied to the gate terminal thereof and is non-conductive when an L-level potential is applied to the gate terminal thereof.

The tuning frequency control circuit 600 has a carrier wave generating circuit 610, multiplier 620, amplifier 630, data processing circuit 640, and capacity control circuit 650. The carrier wave generating circuit 610 generates the carrier wave signal for carrying the data which is information to be transmitted to the contactless IC card. The carrier wave generating circuit 610 supplies the carrier wave signal to the multiplier 620.

The multiplier 620 subjects the carrier wave signal from the data signal generated by the data processing circuit 640 to amplification modulation. The multiplier 620 supplies the amplification modulating wave that is subjected to amplification modulation to the amplifier 630. The amplifier 630 amplifies the amplification modulating wave generated by the multiplier 620 and transfers this to the contactless IC card via the antenna 410.

The data processing circuit 640 encodes the information to be transmitted to the contactless IC card with a predetermined data transfer speed, and generates the data signal. The data processing circuit 640 generates a data signal of a data transfer speed 1696 Kbps by Manchester encoding, for example. Also, the data processing circuit 640 receives the response data from the contactless IC card via the antenna 410, and processes the response data thereof. Also, the data processing circuit 640 outputs a data transmission notification to the capacity control circuit 650 before generating the data signal and transmitting this to the contactless IC card. Also, upon transmitting the data signal to the contactless IC card via the antenna 410, the data processing circuit 640 outputs a transmission ending notification to the capacity control circuit 650.

The capacity control circuit 650 applies an H-level or L-level potential to the gate terminal of the n-type transistor 533. For example, in the event that power is supplied to the reader/writer 400 itself and an electromagnetic wave is originated, the capacity control circuit 650 applies an L-level potential to the gate terminal of the n-type transistor 533. In this case, the n-type transistor 533 is non-conductive, and the tuning frequency control circuit 600 sets the tuning frequency of the antenna 410 determined from the fixed capacitative element 511 and coil 420 as the transmission frequency.

Also, upon the transmission ending notification output from the data processing circuit 640, the capacity control circuit 650 applies an H-level potential to the gate terminal of the n-type transistor 533. In this case, the n-type transistor 533 conducts, and the tuning frequency control circuit 600 sets the tuning frequency of the antenna 410 determined from the synthesized capacity of the fixed capacitative elements 511 and 512 and the coil 420 as the reception frequency.

Also, upon receiving the response data from the contactless IC card, the processing of the response data thereof ending, and the data transmission notification being output, the capacity control circuit 650 applies an L-level potential to the n-type transistor 533. In this case, the n-type transistor 533 is non-conductive, and the tuning frequency control circuit 600 sets the tuning frequency of the antenna 410 determined from the fixed capacitative element 511 and coil 420 as the transmission frequency.

Thus, by changing the capacity of the variable capacity circuit 510, the tuning frequency of the antenna 410 can be switched at the time of transmission of the electromagnetic wave and time of reception thereof.

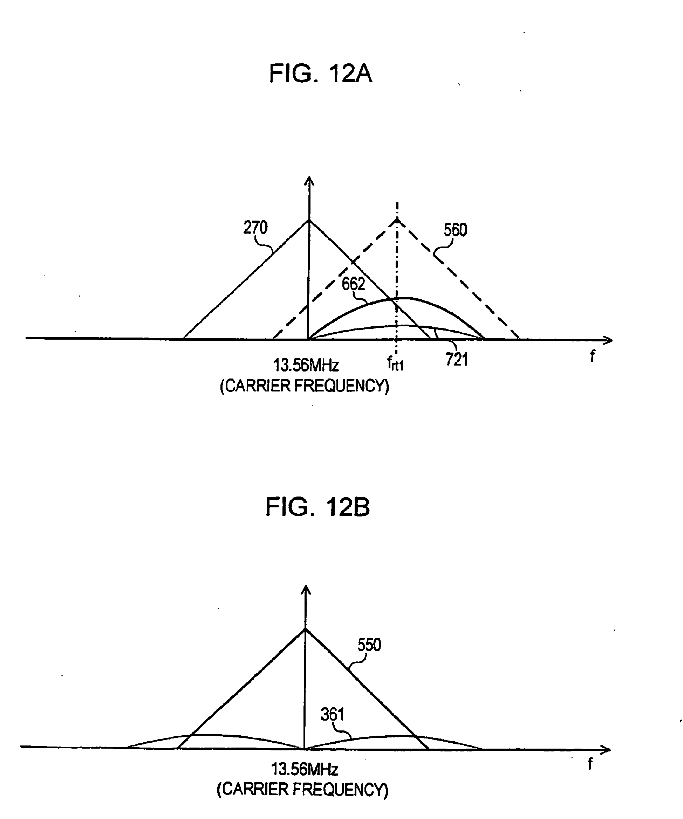

Next, the frequency properties of the antenna 410 will be described with reference to the next diagram. Figs. 12A and 12B are concept diagrams schematically illustrating frequency properties of an antenna 410 in Figs. 10 and 11. Let us say that the carrier wave frequency is 13.56 MHz. Also, the horizontal axis is shown as the frequency. Note that it is assumed here that the tuning frequency of the antenna at time of transmission and at time of reception of the contactless IC card is fixedly set to the carrier wave frequency.

Fig. 12A is a concept diagram showing the frequency property of the antenna 410 at time of reception. The relations between the reception frequency property 270 of the contactless IC card, the transmission frequency property 560 of the reader/writer, the upper sideband 662 of the reader/writer, and the modulating wave 721 of a reader/writer according to related art are shown in the diagram.

The reception frequency property 270 of the contactless IC card is a frequency property of the antenna at time of reception of the contactless IC card, and the vertical axis shows the gain.

The modulating wave 721 according to related art of the reader/writer shown with a broken line is a modulating wave component originating from the reader/writer in the case of setting the tuning frequency of the antenna to the carrier wave frequency, and the vertical axis shows the electromagnetic wave intensity. Note that for the sake of simplicity, the lower sideband will be omitted here.

The transmission frequency property 560 of the reader/writer shown with a broken line is the frequency property of the antenna 410 at time of transmission, and the vertical axis shows the gain. The frequency (fᵣₜ₁) having the highest gain of the transmission frequency property 560 of the reader/writer is the tuning frequency, and the tuning frequency (fᵣₜ₁) at this time is the transmission frequency. The tuning frequency of the transmission frequency property 560 of the reader/writer sets the transmission frequency (fᵣₜ₁) to the frequency at least higher than the modulating wave 721 in order to raise the transmission level of the modulating wave 721.

The upper sideband 662 of the reader/writer shown with a solid line is a frequency component of the data signal originating from the antenna 410 having the transmission frequency property 560 of the reader/writer. The upper sideband 662 of the reader/writer increases in electromagnetic wave intensity as compared to the modulating wave 721 according to related art. Thus, with the contactless IC card, the upper sideband 662 from the reader writer 400 is received, whereby sufficient energy to detect the data of the reader/writer 400 can be secured.

Thus, by setting the transmission frequency of the tuning frequency to a frequency higher than the peak of the upper sideband, high speed data signals from the reader/writer 400 can be received with the contactless IC card.

Note that the frequency of the peak of the upper sideband changes according to the value of the continuous bits of the data signal, but let us assume the case wherein the frequency of the peak of the upper sideband is maximally higher than the carrier wave frequency. For example, if we assume a transfer method wherein the Manchester-encoded data signal is subjected to amplification modulation, in a case that the frequency of the peak of the upper sideband is maximally higher than the carrier wave frequency, this applies to a case wherein the bits of the data signal are generated randomly. The peak of the upper sideband at this time is distanced from the carrier wave frequency only the frequency amount of the clock signal that generates the data transfer speed. Accordingly, if the frequency of the clock signal that generates the data transfer speed is 1.696 MHz, the peak frequency of the upper sideband is 15.256 (= 13.560 + 1.696) MHz, whereby the transmission frequency (fᵣₜ₁) is set to a frequency at least higher than 15.256 MHz.

Fig. 12B is a concept diagram showing the frequency property of the antenna 410 at time of transmission. The modulating wave 361 of the contactless IC card is shown with a broken line, and the reception frequency property 550 of the reader/writer is shown with a solid line.

The reception frequency property 550 of the reader/writer is a frequency property of the antenna 410 at time of reception of the electromagnetic wave from the contactless IC card, and the vertical axis is shown as the gain. The tuning frequency of the reception frequency property 550 of the reader/writer herein is set to the same frequency as the carrier wave frequency. Note that the tuning frequency at this time is called the reception frequency. Thus, by setting the reception frequency to be the same frequency as the carrier wave frequency, the reader/writer 400 can receive the modulating wave from the contactless IC card.

Note that with the first example of the reader/writer 400 according to an embodiment of the present invention, description is given for an example to set the transmission frequency of the antenna 410 such that the electromagnetic intensity of the upper sideband is high; but settings may be performed such that the electromagnetic intensity of the lower sideband is high. This case can be realized by using a p-type transistor which has opposite operations from the n-type transistor instead of the n-type transistor 533 serving as the switch 513 as shown in Fig. 10. The p-type transistor is a switch which is non-conductive when an H-level potential is applied to the gate terminal, and conducts when an L-level potential is applied to the gate terminal. In this case, upon originating an electromagnetic wave from the reader/writer 400, an L-level potential is applied to the gate terminal of the p-type transistor with the capacity control circuit 650, and the transmission frequency is determined from the synthesized capacity of the fixed capacitative elements 511 and 512 and the coil 420.

Also, upon the transmission of the data to be transmitted to the contactless IC card ending, an H-level potential is applied to the gate terminal of the p-type transistor with the capacity control circuit 650, the p-type transistor is non-conductive, and the reception frequency is determined from the fixed capacitative element 511 and coil 420.

Thus, the transmission frequency of the antenna 410 can be set to a frequency lower than the reception frequency. The reception frequency of the antenna 410 is set to the same frequency as the carrier wave frequency so that the reader/writer can receive the response data. Accordingly, the transmission frequency is set such that the electromagnetic intensity of the lower sideband of the reader/writer is high.

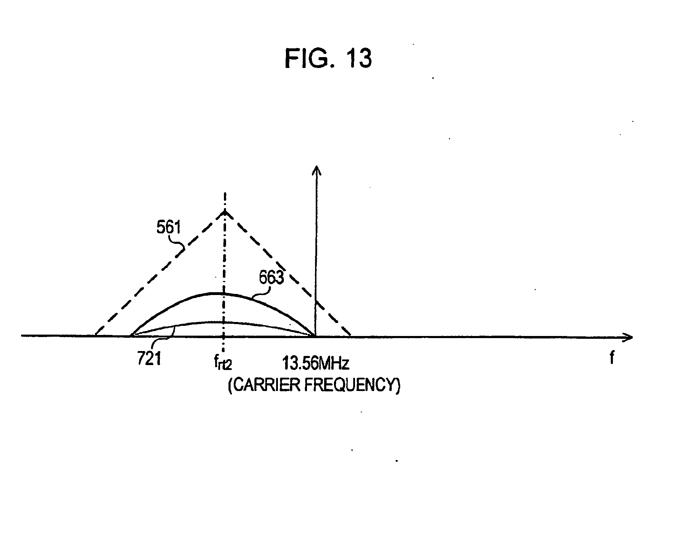

Fig. 13 is a concept diagram schematically illustrating frequency properties of the antenna 410 at time of transmitting in the case of using a p-type transistor as a switch 513. The carrier wave frequency is 13.56 MHz here. Also, the horizontal axis shows the frequency. The frequency property of the antenna 410 at time of reception is the same as that shown in Fig. 12B, so the description thereof will be omitted. The relation between the transmission frequency property 561 of the reader/writer, the lower sideband 663 of the reader/writer, and the modulating wave 721 of a reader/writer according to related art are shown.

The modulating wave 721 according to related art of the reader/writer shown with the dotted line is the modulating wave component originating from the reader/writer in the case that the tuning frequency of the antenna is set to the carrier wave frequency, and the vertical axis shows electromagnetic intensity. Note that the upper sideband is omitted for the sake of simplicity.

The transmission frequency property 561 of the reader/writer shown with the broken line is the frequency property in the case that the electromagnetic wave is transmitted from the antenna 410, and the vertical axis shows the gain. The frequency (fᵣₜ₂) having the highest gain with the transmission frequency property 561 of the reader/writer is the transmission frequency of the tuning frequency. In order to increase the transmission level of the modulating wave 721, the transmission frequency property 561 of the reader/writer herein sets the transmission frequency (fᵣₜ₂) to a frequency that is at least higher than the peak of the modulating wave 721.

The lower sideband 663 of the reader/writer shown with the solid line is the frequency component of the data signal originating from the antenna 410 that has the transmission frequency property 561 of the reader/writer. The lower sideband 663 of the reader/writer has a higher electromagnetic intensity as compared to the modulating wave 721 according to related art. Thus, with the contactless IC card, the lower sideband 663 from the reader/writer 400 is received, whereby sufficient energy to detect the data of the reader/writer 400 can be confirmed.

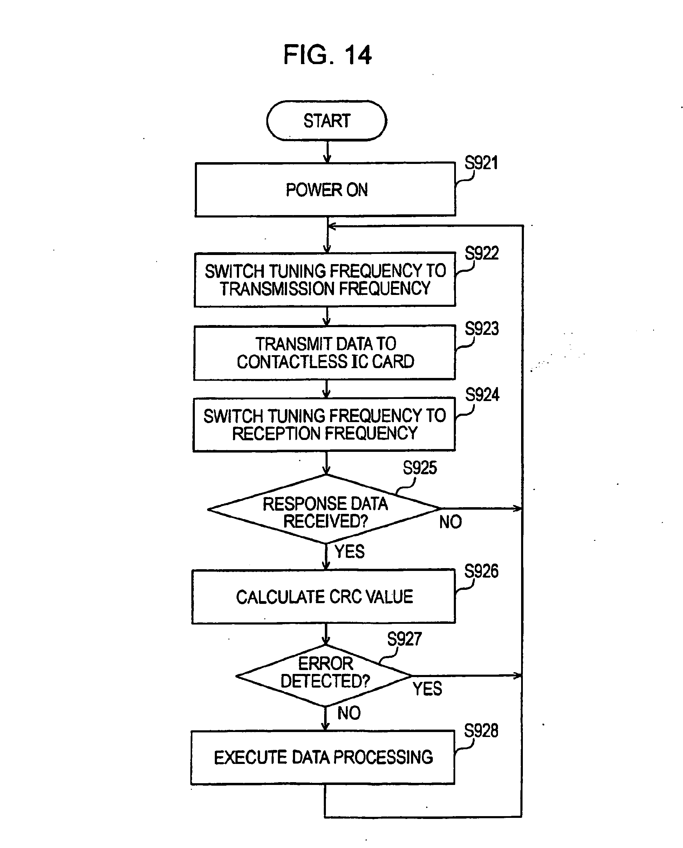

Next, the operations of the reader/writer 400 according to an embodiment of the present invention will be described with reference to the drawing. Fig. 14 is a flowchart illustrating a processing sequence example of tuning frequency control processing of the reader/writer 400 according to an embodiment of the present invention.

First, power is supplied to the reader/writer 400 itself (step S921). Next, the tuning frequency of the antenna 410 is switched to the transmission frequency with the tuning frequency control circuit 600 (step S922). Next, the data to be transmitted to the contactless IC card is transmitted via the antenna 410 (step S923). Upon ending the transmission of the data signal, the tuning frequency of the antenna 410 is switched to the reception frequency with the tuning frequency control circuit 600 (step S924). Next, the flow stands by until the response data is replied from the contactless IC card, and in the case that a reply is not sent even after a predetermined amount of time has passed (step S925), the flow returns to step S922, and the tuning frequency of the antenna 410 is switched to the transmission frequency.

On the other hand, in the case that the response data from the contactless IC card is received (step S925), the CRC value of the response data is calculated with the data processing circuit 640 (step S926). Next, determination is made as to whether or not there is any error in the received response data by confirming the CRC value (step S927). If there is an error in the received response data, the data processing of the response data thereof is executed (step S928), and upon the data processing ending, the flow is returned to step S922, and the tuning frequency of the antenna 410 is switched to the transmission frequency.

Thus, each time the data to be transmitted to the contactless IC card is transmitted, the tuning frequency of the antenna 410 is switched to the transmission frequency and data is transmitted, and upon the transmission thereof ending, the tuning frequency is switched to the reception frequency in order to receive the response data. The operations herein are repeated until a series of communication is ended.

Thus, with the first example of the reader/writer 400 according to the embodiment of the present invention, the capacity of the variable capacity circuit 510 can be changed and the tuning frequency of the antenna 410 switched at time of transmitting and at time of receiving the tuning frequency of the antenna 410, by using the fixed capacitative elements 511 and 512 and the switch 513.

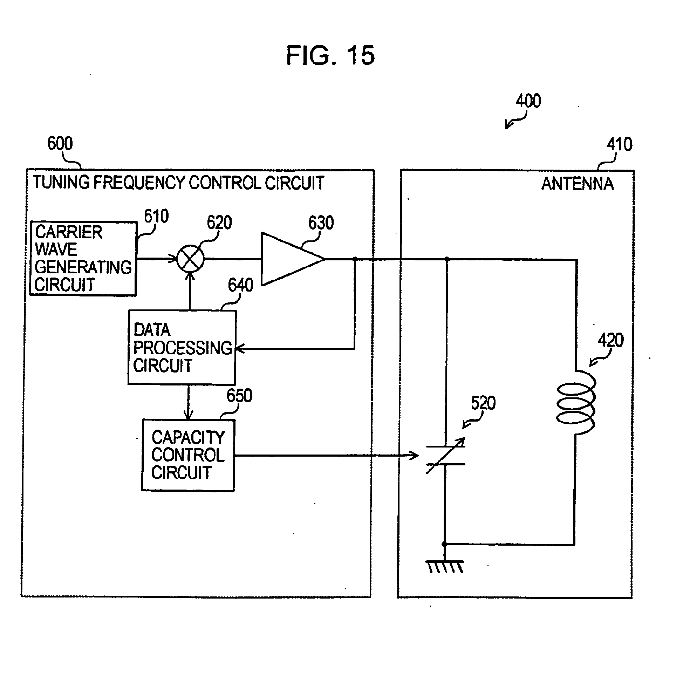

Fig. 15 is a diagram showing a configuration example of the tuning frequency adjusting circuit 500 of the second example of the reader/writer 400 according to an embodiment of the present invention. The configuration of the reader/writer 400 shown in Fig. 11 has a variable capacity diode 520 instead of the variable capacity circuit 510 to serve as the tuning frequency adjusting circuit 500. Note that the configuration herein is the same as that in Fig. 11 other than the variable capacity diode 520, so description thereof will be omitted.

The variable capacity diode 520 changes capacity according to the voltage applied with the capacity control circuit 650.

Thus, by using the variable capacity diode 520, the capacity of the variable capacity diode 520 can be changed and the tuning frequency of the antenna 410 switched at time of transmission and at time of reception. Thus, as shown in Fig. 12, the tuning frequency of the antenna 410 is set to a transmission frequency (fᵣₜ₁) wherein the electromagnetic wave intensity of the upper sideband is higher at time of transmission, and can be set to the same reception frequency as the carrier wave frequency at time of reception. Also, by reversing the properties of the variable capacity diode 520, as shown in Fig. 13, the tuning frequency of the antenna 410 is set to the transmission frequency (fᵣₜ₂) wherein the electromagnetic wave intensity of the upper sideband is higher, and the reception frequency can be set to the carrier wave frequency.

Thus, with the second example of the reader/writer 400 according to the embodiment of the present invention, the number of configuration elements for switching the tuning frequency can be reduced as compared to the reader/writer 400 according to the first example, whereby the circuit size can be suppressed.

With the reader/writer 400 according to the embodiment of the present invention, the capacity of the tuning frequency adjusting circuit 500 can be changed, whereby the tuning frequency of the antenna 410 can be switched to the reception frequency or transmission frequency.

Thus, according to the embodiments of the present invention, the tuning frequency of the antenna can be switched by changing the capacity of the tuning frequency adjusting circuit at time of transmitting and at time of receiving electromagnetic waves from the tuning frequency control circuit. Thus, high-speed communication between the contactless IC card and the reader/writer can be realized.

Note that with the embodiments the description is given of an example of a contactless IC card and a reader/writer, but the present invention can also be applied to a portable terminal and contactless IC card.

Also, the processing sequences described according to the embodiments may be provided as a method having such a series of procedures, and may also be provided as a program to execute the series of procedures with a computer and a recording medium to store the program. The recording medium thereof can use a recording medium such as a CD (Compact Disc), MD (Mini Disc), DVD (Digital Versatile Disk), memory card, Blu-ray Disc (registered trademark), and the like.

It should be understood by those skilled in the art that various modifications, combinations, sub-combinations and alterations may occur depending on design requirements and other factors.

Further examples useful for understanding the inventions are:
1. A transponder comprising:
   an antenna circuit to perform communication with an interrogator, which is a communication subject, via electromagnetic waves,
      wherein said antenna circuit is made up of a coil and a variable capacity circuit which are parallel connected,
      and wherein the tuning frequency thereof is a first frequency; and
      a tuning frequency control circuit to switch the tuning frequency of said antenna circuit is switched to a second frequency in the case of transmitting electromagnetic waves with said antenna circuit.
2. The transponder according to item 1, wherein, upon the data processing of the data received from said interrogator ending, said tuning frequency control circuit switches said tuning frequency to said second frequency before transmitting the electromagnetic waves with said antenna circuit.
3. The transponder according to item 2, wherein said tuning frequency control circuit switches said tuning frequency to said first frequency after transmitting results of said data processing to said interrogator via said antenna circuit.
4. The transponder according to item 2, wherein said tuning frequency control circuit switches said tuning frequency to said first frequency in the case that the power voltage generated by alternating current voltage induced in said antenna circuit via the electromagnetic wave originating from said interrogator is below a predetermined voltage.
5. The transponder according to item 1, wherein said first frequency is a frequency higher than the peak of a sideband with a high frequency, of the sidebands transmitted from said interrogator.
6. The transponder according to item 1, wherein said first frequency is a frequency lower than the peak of a sideband with a low frequency, of the sidebands transmitted from said interrogator.
7. The transponder according to item 1, wherein said tuning frequency control circuit switches said tuning frequency to said second frequency by controlling said variable capacity circuit.
8. The transponder according to item 1, wherein
   said variable capacity circuit includes
   a first fixed capacitative element and switch connected directly, and
   a second fixed capacitative element connected serially to said directly connected first fixed capacitative element and switch;
   and wherein said tuning frequency control circuit changes the capacity of said variable capacity circuit by controlling said switch, and switches said tuning frequency to said second frequency.
9. The transponder according to item 1, wherein
   said variable capacity circuit includes a variable capacity diode;
   and wherein said tuning frequency control circuit switches said tuning frequency to said second frequency by controlling the capacity of said variable capacity diode.
10. An interrogator comprising:
   an antenna circuit made up of a coil and a variable capacity circuit which are parallel connected to perform communication with a transponder, which is a communication subject, via electromagnetic waves; and
   a tuning frequency control circuit to switch the tuning frequency of said antenna circuit is switched to
      a first frequency in the case of transmitting an electromagnetic wave from said antenna circuit, and
      a second frequency in the case of receiving the electromagnetic waves transmitted with said transponder.
11. The interrogator according to item 10, wherein said tuning frequency control circuit switches the tuning frequency of said antenna circuit to said second frequency after transmitting the data to be transmitted to said transponder via said antenna circuit.
12. The interrogator according to item 11, wherein said tuning frequency control circuit switches the tuning frequency of said antenna circuit to said first frequency before transmitting an electromagnetic wave from said antenna circuit, upon processing of the response data as to said data from said transponder ending.
13. The interrogator according to item 10, wherein said first frequency is a frequency higher than the peak of a sideband with a high frequency, of the sidebands transmitted from said antenna circuit.
14. The interrogator according to item 10, wherein said first frequency is a frequency lower than the peak of a sideband with a low frequency, of the sidebands transmitted from said antenna circuit.
15. The interrogator according to item 10, wherein said tuning frequency control circuit switches the tuning frequency of said antenna circuit to said first or second frequency by controlling said variable capacity circuit.
16. The interrogator according to item 10, wherein said variable capacity circuit includes
   a first fixed capacitative element and switch connected directly, and
   a second fixed capacitative element connected serially to said directly connected first fixed capacitative element and switch;
   and wherein said tuning frequency control circuit changes the capacity of said variable capacity circuit by controlling said switch, and switches said tuning frequency of said antenna circuit to said first or second frequency.
17. The interrogator according to item 10, wherein said variable capacity circuit includes a variable capacity diode,
   and wherein said tuning frequency control circuit switches said tuning frequency of said antenna circuit to said first or second frequency by controlling the capacity of said variable capacity diode.
18. A communication device comprising:
   an antenna circuit made up of a coil and a variable capacity circuit which are parallel connected to perform communication with another communication device, which is a communication subject, via electromagnetic waves; and
   a tuning frequency control circuit to switch the tuning frequency of said antenna circuit to
      a first frequency in the case of receiving an electromagnetic wave originating from said other communication device, and
      a second frequency in the case of transmitting the electromagnetic waves transmitted with said antenna circuit.

## Claims

1. A transponder (100) comprising:
an antenna circuit (110) to perform communication with an interrogator (400), which is a communication subject, via modulated electromagnetic waves.
wherein said antenna circuit (110) is made up of a coil (120) and a variable capacity circuit (210) which are parallel connected,
**characterized in that** the tuning frequency of the antenna circuit (110) is a first frequency, said first frequency being a reception frequency for receiving the modulated electromagnetic waves (661) from said interrogator (400) and being a frequency that lies within one of the sidebands of the modulated electromagnetic waves (661) transmitted from the interrogator (400); and by
a tuning frequency control circuit (300) to switch the tuning frequency of said antenna circuit (110) to a second frequency in the case of transmitting modulated electromagnetic waves (361) with said antenna circuit (110), said second frequency being a transmitting frequency which matches the carrier wave frequency of the modulated electromagnetic waves (361) transmitted with said antenna circuit (110).

2. The transponder (100) according to Claim 1, wherein, upon the data processing of the data received from said interrogator ending, said tuning frequency control circuit (300) switches said tuning frequency to said second frequency before transmitting the electromagnetic waves (361) with said antenna circuit (110).

3. The transponder (100) according to Claim 2, wherein said tuning frequency control circuit (300) switches said tuning frequency to said first frequency after transmitting results of said data processing to said interrogator (400) via said antenna circuit (110).

4. The transponder (100) according to Claim 2, wherein said tuning frequency control circuit (300) switches said tuning frequency to said first frequency in the case that the power voltage generated by alternating current voltage induced in said antenna circuit (110) via the electromagnetic wave originating from said interrogator (400) is below a predetermined voltage.

5. The transponder (100) according to any of the preceding claims, wherein said first frequency is a frequency higher than the peak of a sideband with a high frequency, of the sidebands transmitted from said interrogator (400).

6. The transponder (100) according to any of the preceding claims, wherein said first frequency is a frequency lower than the peak of a sideband with a low frequency, of the sidebands transmitted from said interrogator (400).

7. The transponder (100) according to any of the preceding claims, wherein said tuning frequency control circuit (300) switches said tuning frequency to said second frequency by controlling said variable capacity circuit (210).

8. The transponder (100) according to any of the preceding claims, wherein said variable capacity circuit (210) includes
a first fixed capacitative element (211) and switch (213) connected directly, and
a second fixed capacitative element (212) connected serially to said directly connected first fixed capacitative element (211) and switch (213):
and wherein said tuning frequency control circuit (300) changes the capacity of said variable capacity circuit (210) by controlling said switch (213), and switches said tuning frequency to said second frequency.

9. The transponder (100) according to any of the preceding claims, wherein said variable capacity circuit (210) includes a variable capacity diode (220);
and wherein said tuning frequency control circuit (300) switches said tuning frequency to said second frequency by controlling the capacity of said variable capacity diode (220).

10. An interrogator (400) comprising:
an antenna circuit (410) made up of a coil (420) and a variable capacity circuit (510) which are parallel connected to perform communication with a transponder (100), which is a communication subject, via modulated electromagnetic waves; **characterized by**
a tuning frequency control circuit (600) to switch the tuning frequency of said antenna circuit (410)to
a first frequency in the case of transmitting a modulated electromagnetic wave (662) from said antenna circuit (410), wherein said first frequency lies within one of the sidebands of the modulated electromagnetic wave (662) transmitted from said antenna circuit (410), and
a second frequency in the case of receiving the modulated electromagnetic waves (361) transmitted with said transponder (100), wherein said second frequency matches the carrier wave frequency of said modulated electromagnetic waves (361) transmitted from said transponder (100).

11. The interrogator (400) according to Claim 10, wherein said tuning frequency control circuit (600) switches the tuning frequency of said antenna circuit (410) to said second frequency after transmitting the data to be transmitted to said transponder (100) via said antenna circuit (410).

12. The interrogator (400) according to Claim 11, wherein said tuning frequency control circuit (600) switches the tuning frequency of said antenna circuit (410) to said first frequency before transmitting an electromagnetic wave from said antenna circuit (410), upon processing of the response data as to said data from said transponder ending.

13. The interrogator (400) according to any of claims 10 to 12, wherein said first frequency is a frequency higher than the peak of a sideband with a high frequency, of the sidebands transmitted from said antenna circuit (410).

14. The interrogator (400) according to any of claims 10 to 13, wherein said first frequency is a frequency lower than the peak of a sideband with a low frequency, of the sidebands transmitted from said antenna circuit (410).

15. The interrogator(400) according to any of claims 10 to 14, wherein said variable capacity circuit (510) includes
a first fixed capacitative element (511) and a switch (513) connected in series, and
a second fixed capacitative element (512) parallel connected to said series connected first fixed capacitative element (511) and switch (513):
and wherein said tuning frequency control circuit (600) changes the capacity of said variable capacity circuit (510) by controlling said switch (513), and switches said tuning frequency of said antenna circuit (410) to said first or second frequency.

## Patentansprüche

1. Transponder (100), mit:
einer Antennenschaltung (110), um eine Kommunikation mit einer Abfrageeinrichtung (400), die ein Kommunikationssubjekt ist, über modulierte elektromagnetische Wellen auszuführen,
wobei die Antennenschaltung (110) aus einer Spule (120) und einer Schaltung (10) mit variabler Kapazität, die parallelgeschaltet sind, aufgebaut ist,
**dadurch gekennzeichnet, dass**
die Abstimmfrequenz der Antennenschaltung (110) eine erste Frequenz ist, wobei die erste Frequenz eine Empfangsfrequenz ist, um die modulierten elektromagnetischen Wellen (661) von der Abfrageeinrichtung (400) zu empfangen, und eine Frequenz ist, die in einem der Seitenbänder der modulierten elektromagnetischen Wellen (661) liegt, die von der Abfrageeinrichtung (400) gesendet werden; und
dass eine Abstimmfrequenz-Steuerschaltung (300) vorgesehen ist, um die Abstimmfrequenz der Antennenschaltung (110) zu einer zweiten Frequenz umzuschalten, falls modulierte elektromagnetische Wellen (361) mit der Antennenschaltung (110) gesendet werden, wobei die zweite Frequenz eine Sendefrequenz ist, die an die Trägerwellenfrequenz der modulierten elektromagnetischen Wellen (361), die mit der Antennenschaltung (110) gesendet werden, angepasst ist.

2. Transponder (100) nach Anspruch 1, wobei dann, wenn die Datenverarbeitung der von der Abfrageeinrichtung empfangenen Daten endet, die Abstimmfrequenz-Steuerschaltung (300) die Abstimmfrequenz zu der zweiten Frequenz umschaltet, bevor die elektromagnetischen Wellen (361) mit der Antennenschaltung (110) gesendet werden.

3. Transponder (100) nach Anspruch 2, wobei die Abstimmfrequenz-Steuerschaltung (300) die Abstimmfrequenz zu der ersten Frequenz umschaltet, nachdem Ergebnisse der Datenverarbeitung zu der Abfrageeinrichtung (400) über die Antennenschaltung (110) gesendet worden sind.

4. Transponder (100) nach Anspruch 2, wobei die Abstimmfrequenz-Steuerschaltung (300) die Abstimmfrequenz zu der ersten Frequenz umschaltet, falls die Leistungsspannung, die durch eine Wechselspannung erzeugt wird, die in der Antennenschaltung (110) über die von der Abfrageeinrichtung (400) ausgehende elektromagnetische Welle induziert wird, unter einer vorgegebenen Spannung liegt.

5. Transponder (100) nach einem der vorhergehenden Ansprüche, wobei die erste Frequenz eine Frequenz ist, die höher ist als die Spitze eines Seitenbands mit hoher Frequenz der von der Abfrageeinrichtung (400) gesendeten Seitenbänder.

6. Transponder (100) nach einem der vorhergehenden Ansprüche, wobei die erste Frequenz eine Frequenz ist, die niedriger ist als die Spitze eines Seitenbands mit niedriger Frequenz der von der Abfrageeinrichtung (400) gesendeten Seitenbänder.

7. Transponder (100) nach einem der vorhergehenden Ansprüche, wobei die Abstimmfrequenz-Steuerschaltung (300) die Abstimmfrequenz zu der zweiten Frequenz durch Steuern der Schaltung (210) mit variabler Kapazität umschaltet.

8. Transponder (100) nach einem der vorhergehenden Ansprüche, wobei die Schaltung (210) mit variabler Kapazität enthält:
ein erstes festes kapazitives Element (211) und einen Schalter (213), direkt angeschlossen und
ein zweites festes kapazitives Element (212), das mit dem direkt angeschlossenen ersten festen kapazitiven Element (211) und dem Schalter (213) in Reihe geschaltet ist;
und wobei die Abstimmfrequenz-Steuerschaltung (300) die Kapazität der Schaltung (210) mit variabler Kapazität durch Steuern des Schalters (213) ändert und die Abstimmfrequenz zu der zweiten Frequenz umschaltet.

9. Transponder (100) nach einem der vorhergehenden Ansprüche, wobei die Schaltung (210) mit variabler Kapazität eine Diode (220) mit variabler Kapazität enthält;
und wobei die Abstimmfrequenz-Steuerschaltung (300) die Abstimmfrequenz durch Steuern der Kapazität der Diode (220) mit variabler Kapazität zu der zweiten Frequenz umschaltet.

10. Abfrageeinrichtung (400), mit:
einer Antennenschaltung (410), die aus einer Spule (420) und aus einer Schaltung (510) mit variabler Kapazität, die parallelgeschaltet sind, gebildet ist, um eine Kommunikation mit einem Transponder (100), der ein Kommunikationssubjekt ist, über modulierte elektromagnetische Wellen auszuführen;
**gekennzeichnet durch**
eine Abstimmfrequenz-Steuerschaltung (600), um die Abstimmfrequenz der Antennenschaltung (410) umzuschalten zu
einer ersten Frequenz, falls eine modulierte elektromagnetische Welle (662) von der Antennenschaltung (410) gesendet wird, wobei die erste Frequenz in einem der Seitenbänder der modulierten elektromagnetischen Welle (662) liegt, die von der Antennenschaltung (410) gesendet wird, und
einer zweiten Frequenz, falls die mit dem Transponder (100) gesendeten modulierten elektromagnetischen Wellen (361) empfangen werden, wobei die zweite Frequenz an die Trägerwellenfrequenz der von dem Transponder (100) gesendeten modulierten elektromagnetischen Wellen (361) angepasst ist.

11. Abfrageeinrichtung (400) nach Anspruch 10, wobei die Abstimmfrequenz-Steuerschaltung (600) die Abstimmfrequenz der Antennenschaltung (410) zu der zweiten Frequenz umschaltet, nachdem die Daten, die zu dem Transponder (100) gesendet werden sollen, über die Antennenschaltung (410) gesendet worden sind.

12. Abfrageeinrichtung (400) nach Anspruch 11, wobei die Abstimmfrequenz-Steuerschaltung (600) die Abstimmfrequenz der Antennenschaltung (410) zu der ersten Frequenz umschaltet, bevor eine elektromagnetische Welle von der Antennenschaltung (410) gesendet wird, wenn die Verarbeitung der Antwortdaten im Hinblick auf die Daten von dem Transponder endet.

13. Abfrageeinrichtung (400) nach einem der Ansprüche 10 bis 12, wobei die erste Frequenz eine Frequenz ist, die höher ist als die Spitze eines Seitenbands mit hoher Frequenz der von der Antennenschaltung (410) gesendeten Seitenbänder.

14. Abfrageeinrichtung (400) nach einem der Ansprüche 10 bis 13, wobei die erste Frequenz eine Frequenz ist, die niedriger ist als die Spitze eines Seitenbands mit niedriger Frequenz der von der Antennenschaltung (410) gesendeten Seitenbänder.

15. Abfrageeinrichtung (400) nach einem der Ansprüche 10 bis 14, wobei die Schaltung (510) mit variabler Kapazität enthält:
ein erstes festes kapazitives Element (511) und einen Schalter (513), die in Reihe geschaltet sind, und
ein zweites festes kapazitives Element (512), das mit der Reihenschaltung aus dem ersten festen kapazitiven Element (511) und dem Schalter (513) parallelgeschaltet ist;
und wobei die Abstimmfrequenz-Steuerschaltung (600) die Kapazität der Schaltung (510) mit variabler Kapazität durch Steuern des Schalters (513) ändert und die Abstimmfrequenz der Antennenschaltung (410) zu der ersten oder der zweiten Frequenz umschaltet.

## Revendications

1. Transpondeur (100) comprenant :
un circuit d'antenne (110) pour effectuer une communication avec un interrogateur (400), qui est un sujet de communication, par l'intermédiaire d'ondes électromagnétiques modulées,
dans lequel ledit circuit d'antenne (110) est composé d'une bobine (120) et d'un circuit à capacité variable (210) qui sont connectés en parallèle, **caractérisé en ce que**
la fréquence d'accord du circuit d'antenne (110) est une première fréquence, ladite première fréquence étant une fréquence de réception pour recevoir les ondes électromagnétiques modulées (661) dudit interrogateur (400) et étant une fréquence qui se trouve dans l'une des bandes latérales des ondes électromagnétiques modulées (661) transmises par l'interrogateur (400) ; et par
un circuit de commande de fréquence d'accord (300) pour commuter la fréquence d'accord dudit circuit d'antenne (110) vers une deuxième fréquence dans le cas de la transmission d'ondes électromagnétiques modulées (361) par ledit circuit d'antenne (110), ladite deuxième fréquence étant une fréquence de transmission qui correspond à la fréquence d'onde porteuse des ondes électromagnétiques modulées (361) transmises par ledit circuit d'antenne (110).

2. Transpondeur (100) selon la revendication 1, dans lequel, à la fin du traitement de données des données reçues dudit interrogateur, ledit circuit de commande de fréquence d'accord (300) commute ladite fréquence d'accord vers ladite deuxième fréquence avant de transmettre les ondes électromagnétiques (361) par ledit circuit d'antenne (110).

3. Transpondeur (100) selon la revendication 2, dans lequel ledit circuit de commande de fréquence d'accord (300) commute ladite fréquence d'accord vers ladite première fréquence après avoir transmis les résultats dudit traitement de données audit interrogateur (400) par l'intermédiaire dudit circuit d'antenne (110).

4. Transpondeur (100) selon la revendication 2, dans lequel ledit circuit de commande de fréquence d'accord (300) commute ladite fréquence d'accord vers ladite première fréquence dans le cas où la tension d'alimentation générée par la tension alternative induite dans ledit circuit d'antenne (110) par l'onde électromagnétique provenant dudit interrogateur (400) est inférieure à une tension prédéterminée.

5. Transpondeur (100) selon l'une quelconque des revendications précédentes, dans lequel ladite première fréquence est une fréquence supérieure au pic d'une bande latérale avec une fréquence élevée, des bandes latérales transmises par ledit interrogateur (400).

6. Transpondeur (100) selon l'une quelconque des revendications précédentes, dans lequel ladite première fréquence est une fréquence inférieure au pic d'une bande latérale avec une faible fréquence, des bandes latérales transmises par ledit interrogateur (400).

7. Transpondeur (100) selon l'une quelconque des revendications précédentes, dans lequel ledit circuit de commande de fréquence d'accord (300) commute ladite fréquence d'accord vers ladite deuxième fréquence en commandant ledit circuit à capacité variable (210).

8. Transpondeur (100) selon l'une quelconque des revendications précédentes, dans lequel ledit circuit à capacité variable (210) comprend :
un premier élément capacitif fixe (211) et un commutateur (213) connectés directement, et
un deuxième élément capacitif fixe (212) connecté en série auxdits premier élément capacitif fixe (211) et commutateur (213) connectés directement ;
et dans lequel ledit circuit de commande de fréquence d'accord (300) modifie la capacité dudit circuit à capacité variable (210) en commandant ledit commutateur (213), et commute ladite fréquence d'accord vers ladite deuxième fréquence.

9. Transpondeur (100) selon l'une quelconque des revendications précédentes, dans lequel
ledit circuit à capacité variable (210) comprend une diode à capacité variable (220) ;
et dans lequel ledit circuit de commande de fréquence d'accord (300) commute ladite fréquence d'accord vers ladite deuxième fréquence en commandant la capacité de ladite diode à capacité variable (220).

10. Interrogateur (400) comprenant :
un circuit d'antenne (410) composé d'une bobine (420) et d'un circuit à capacité variable (510) qui sont connectés en parallèle pour effectuer une communication avec un transpondeur (100), qui est un sujet de communication, par l'intermédiaire d'ondes électromagnétiques modulées ; **caractérisé par**
un circuit de commande de fréquence d'accord (600) pour commuter la fréquence d'accord dudit circuit d'antenne (410) vers
une première fréquence dans le cas de la transmission d'une onde électromagnétique modulée (662) par ledit circuit d'antenne (410), dans lequel ladite première fréquence se trouve dans l'une des bandes latérales de l'onde électromagnétique modulée (662) transmise par ledit circuit d'antenne (410), et
une deuxième fréquence dans le cas de la réception des ondes électromagnétiques modulées (361) transmises par ledit transpondeur (100), dans lequel ladite deuxième fréquence correspond à la fréquence d'onde porteuse desdites ondes électromagnétiques modulées (361) transmises par ledit transpondeur (100).

11. Interrogateur (400) selon la revendication 10, dans lequel ledit circuit de commande de fréquence d'accord (600) commute la fréquence d'accord dudit circuit d'antenne (410) vers ladite deuxième fréquence après avoir transmis les données à transmettre audit transpondeur (100) par l'intermédiaire dudit circuit d'antenne (410).

12. Interrogateur (400) selon la revendication 11, dans lequel ledit circuit de commande de fréquence d'accord (600) commute la fréquence d'accord dudit circuit d'antenne (410) vers ladite première fréquence avant de transmettre une onde électromagnétique à partir dudit circuit d'antenne (410), à la fin du traitement des données de réponse quant auxdites données provenant dudit transpondeur.

13. Interrogateur (400) selon l'une quelconque des revendications 10 à 12, dans lequel ladite première fréquence est une fréquence supérieure au pic d'une bande latérale avec une fréquence élevée, des bandes latérales transmises par ledit circuit d'antenne (410).

14. Interrogateur (400) selon l'une quelconque des revendications 10 à 13, dans lequel ladite première fréquence est une fréquence inférieure au pic d'une bande latérale avec une faible fréquence, des bandes latérales transmises par ledit circuit d'antenne (410).

15. Interrogateur (400) selon l'une quelconque des revendications 10 à 14, dans lequel ledit circuit à capacité variable (510) comprend
un premier élément capacitif fixe (511) et un commutateur (513) connectés en série, et
un deuxième élément capacitif fixe (512) connecté en parallèle auxdits premier élément capacitif fixe (511) et commutateur (513) connectés en série ;
et dans lequel ledit circuit de commande de fréquence d'accord (600) modifie la capacité dudit circuit à capacité variable (510) en commandant ledit commutateur (513), et commute ladite fréquence d'accord dudit circuit d'antenne (410) vers ladite première ou deuxième fréquence.
